# EUROPEAN PATENT SPECIFICATION

(11) **EP 4 264 464 B1**
(45) Date of publication and mention of the grant of the patent: **15.07.2026**
(21) Application number: 21844842.1
(22) Date of filing: 15.12.2021
(51) Int. Cl.: G06F 21/56

(54) **METHODS AND SYSTEMS FOR RANSOMWARE DETECTION, ISOLATION AND REMEDIATION**
VERFAHREN UND SYSTEME ZUR RANSOMWARE-DETEKTION, -ISOLIERUNG UND -SANIERUNG
PROCÉDÉS ET SYSTÈMES POUR LA DÉTECTION, L'ISOLEMENT ET LA REMÉDIATION DE RANÇONGICIELS

(30) Priority: 19.12.2020 US 202017128048
(43) Date of publication of application: 25.10.2023
(73) Proprietor: Kaseya US LLC, Miami, Florida 33131 (US)
(72) Inventor: HANSEN, Kurt, Norwalk, CT 06851 (US); KNOOP, Kevin, Norwalk, CT 06851 (US); LEE, Stan, Norwalk, CT 06851 (US)
(74) Representative: Foster, Mark Charles
(86) International application number: PCT/US2021/063532
(87) International publication number: WO 2022/132911

(56) References cited:
- WO-A1-2020/028152
- US-A1- 2018 248 896
- JUNG SANGMOON ET AL: "Ransomware detection method based on context-aware entropy analysis", SOFT COMPUTING, SPRINGER BERLIN HEIDELBERG, BERLIN/HEIDELBERG, vol. 22, no. 20, 30 May 2018 (2018-05-30), pages 6731 - 6740, XP036602243, ISSN: 1432-7643, [retrieved on 20180530], DOI: 10.1007/S00500-018-3257-Z
- BERRUETA EDUARDO ET AL: "A Survey on Detection Techniques for Cryptographic Ransomware", IEEE ACCESS, vol. 7, 7 October 2019 (2019-10-07), pages 144925 - 144943, XP011750413, DOI: 10.1109/ACCESS.2019.2945839
- LOCK MATT: "Five steps to beating ransomware's five-minute warning", COMPUTER FRAUD AND SECURITY, OXFORD, GB, vol. 2020, no. 11, 1 November 2020 (2020-11-01), pages 6 - 8, XP086350881, ISSN: 1361-3723, [retrieved on 20201118], DOI: 10.1016/S1361-3723(20)30117-2

## Description

### CROSS REFERENCE TO RELATED APPLICATION

This application claims priority to and the benefit of U.S. Utility Patent Application Serial No. 17/128,048, filed December 19, 2020 and entitled METHODS AND SYSTEMS FOR RANSOMWARE DETECTION, ISOLATION AND REMEDIATION, the contents of which are fully incorporated herein by reference.

### FIELD

The following relates to various systems and methods for ransomware detection, isolation and/or remediation. It finds particular application in conjunction with Remote Monitoring and Management (RMM) systems and will be described with particular reference thereto. However, it is to be appreciated that the present exemplary embodiments are also amenable to other like applications.

### BACKGROUND

The present exemplary embodiment relates US Patent Application Serial No. 16/431,188, filed June 4, 2019, for Methods and Systems for Ransomware Detection, Isolation and/or Remediation. It finds particular application in conjunction with Remote Monitoring and Management (RMM) systems and will be described with particular reference thereto.

U.S. Pub. No. 2018/0107824 A1, published April 19, 2018 and entitled "SYSTEMS AND METHODS FOR DETECTING RANSOMWARE INFECTION", discloses, as some illustrative embodiments, systems and methods for detecting ransomware infection in filesystems. These systems and methods may enable a computer user to detect a ransomware infection within a filesystem utilizing a snapshot image-based backup. According to some embodiments, the disclosed systems and methods analyze metadata describing the contents of an examined filesystem embodied in a Master File Table (MFT). Also, according to some embodiments, the disclosed systems and methods compute an entropy associated with an extracted sample of files to distinguish between infected and uninfected file systems. Relative to other techniques, the disclosed systems/methods can decrease the time and/or computational resources required to detect ransomware, while also decreasing false positives and false negatives.

U.S. Publication. No. 2020/0387609 A1, published December 10, 2020 and entitled "METHODS AND SYSTEMS FOR DETECTING A RANSOMWARE ATTACK USING ENTROPY ANALYSIS AND FILE UPDATE PATTERNS", discloses, as some illustrative embodiments, methods, and systems for detecting a ransomware-encryption in one or more files. According to an exemplary embodiment, a low frequency encryption analysis and a high frequency encryption analysis of a plurality of received files is performed to determine if the one or more of the files are encrypted. If a file is encrypted, a watcher is utilized to monitor file-events associated with the files for determining if one or more of the files are infected with ransomware.

U.S. Publication. No. 2021/0312066 A1, published October 7, 2021 and entitled "METHODS AND SYSTEMS FOR DETECTING RANSOMWARE ATTACK IN INCREMENTAL BACKUP," discloses ransomware attack (RWA) detection performed during an incremental or differential backup of a system of folders or directories of a computer or network of computers via an electronic network. The RWA detection protection includes processing incremental or differential backup metadata acquired during the incremental or differential backup to determine whether a RWA alert is issued. RWA remediation is performed at least in part on the RWA alert being issued. The RWA alert may be issued based on processing of the incremental or differential backup metadata to identify candidate new files and candidate deleted files in which the candidate new files are candidates for being encrypted copies of the candidate deleted files. RWA alert criterion may be based on counts of new versus deleted files in a folder or directory, and comparison of file sizes of the new versus deleted files.

### BRIEF DESCRIPTION

In one aspect of the present invention, there is provided a RMM, Remote Monitoring and Management, system as defined in claim 1. Optional features are specified in the dependent claims.

In another aspect of the present invention, there is provided a Ransomware Detection, RD, and Isolation module as defined in claim 8. Optional features are specified in the dependent claims.

In still another aspect of the present invention, there is provided a RMM, Remote Monitoring and Management, system as defined in claim 14. Optional features are specified in the dependent claims.

### BRIEF DESCRIPTION OF THE DRAWINGS

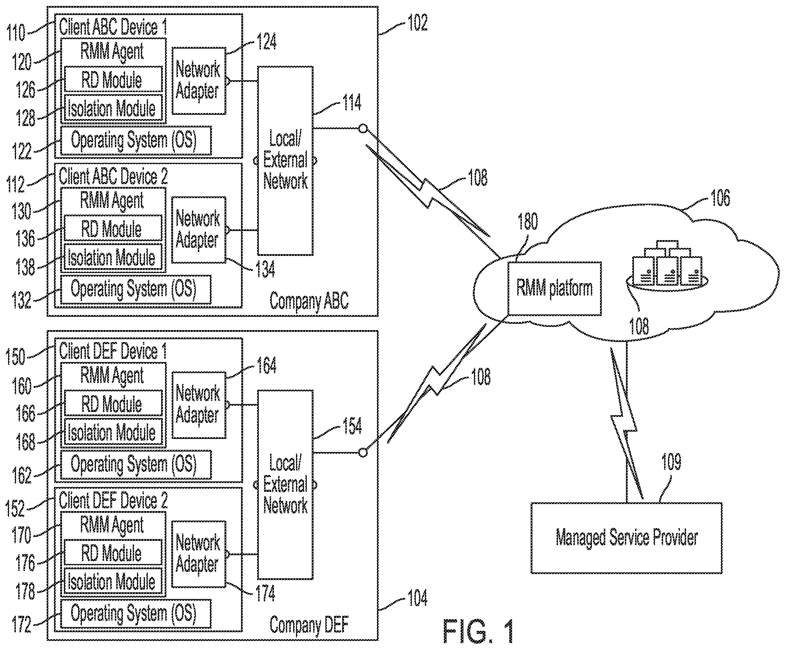

FIG. 1 is a block diagram of a RMM system, including ransomware detection and isolation, the RMM system operatively associated with monitoring and managing a plurality of devices and the RMM system including a RMM agent module locally installed on each device and operatively communicating with an operating system (OS) installed on each device, a cloud-based RMM platform operatively communicating with each device RMM agent module, the cloud-based RMM platform configured for a MSP to monitor and manage each of the plurality of devices, and a Ransomware Detection (RD) and Isolation module locally installed on each device and operatively communicating with each respective device agent module, the RD and Isolation module configured to detect a potential ransomware-encryption in a device and isolate the ransomware affected device according to an exemplary embodiment of this disclosure.
FIG 2 is a flow chart of a ransomware detection and isolation method according to an exemplary embodiment of this disclosure.

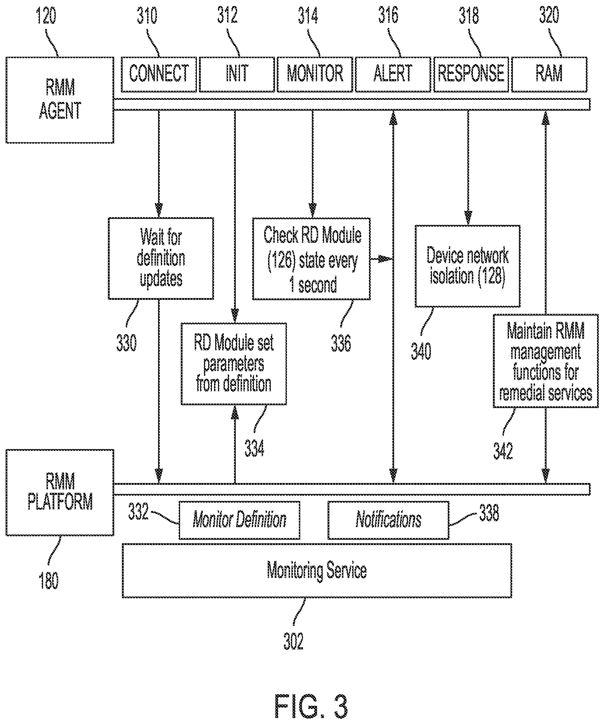

FIG. 3 is a block diagram of a RMM system architecture, including ransomware detection and isolation, the RMM system operatively associated with monitoring and managing a plurality of devices and the RMM system including a RMM agent module locally installed on each device and operatively communicating with an operating system (OS) installed on each device, a cloud-based RMM platform operatively communicating with each device RMM agent module, the cloud-based RMM platform configured to monitor and manage each of the plurality of devices, and a Ransomware Detection (RD) and Isolation module locally installed on each device and operatively communicating with each respective device agent module, the RD and Isolation module configured to detect a potential ransomware encryption in a device and isolate the ransomware affected device according to an exemplary embodiment of this disclosure.
FIG 4 is a flow chart of a ransomware detection method incorporated into a RD module according to an exemplary embodiment of this disclosure.

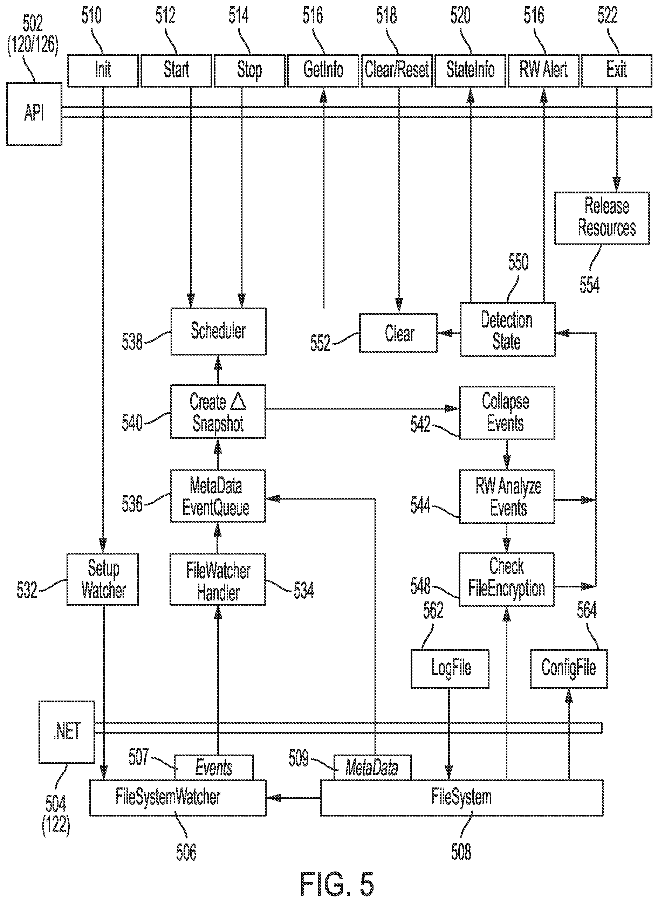

FIG. 5 is a block diagram of a RMM system operatively associated with monitoring and managing a plurality of devices, including ransomware detection, the RMM system including a RMM agent module locally installed on each device and operatively communicating with an OS installed on each device; a cloud-based RMM platform operatively communicating with each device RMM agent module, the cloud-based RMM Platform configured to monitor and manage each of the plurality of devices; and a RD module locally installed on each device and operatively communicating with each respective device RMM agent module.
FIG. 6 is a block diagram of a RD and Isolation module operatively associated with a cloud-based RMM platform for monitoring and managing a plurality of devices.
FIG. 7 is a block diagram of an RMM server and agent architecture including a ransomware detection and isolation module according to an exemplary embodiment of this disclosure.
FIG. 8 is a block diagram of a computer system with a set of instructions to perform a ransomware detection and isolation method according to an exemplary embodiment of this disclosure.

### DETAILED DESCRIPTION

Disclosed herein are methods and systems for ransomware detection and isolation of a ransomware-encryption device performed in a Remote Monitoring and Management (RMM) system environment.

Managed service providers (MSP) provide various IT (Information Technology) services to their clients. An MSP monitors and manages the client's IT devices and infrastructure using RMM (Remote Monitoring and Management) tools. In general, RMM is the process of supervising and controlling various IT systems and devices using locally installed agents which can be accessed by the MSP, either via a cloud-based portal or via one or more locally installed communication channels located at a client site. These IT systems and devices may include networks, workstations, servers, desktop computers workstations, laptop PCs, mobile devices, printers, etc. Some of the services MSPs provide to their clients includes, but is not limited to, backup systems (cloud and local), disaster recovery, management and deployment of system/device software, malware detection and remediation, ransomware detection and remediation, etc.

Disclosed herein is a RMM system operatively associated with monitoring and managing a plurality of devices. According to an exemplary embodiment, the RMM system includes a RMM agent module locally installed on each device, a cloud-based RMM platform operatively communicating with each device RMM agent module, and a Ransomware Detection (RD)/Isolation module locally installed on each device. The RD/Isolation module locally detects on a client device a potential ransomware-encryption of one or more files received by the client's device and the RMM system isolates a ransomware affected client device using a locally executed script either provided by the cloud-based RMM platform or locally residing on the client device.

Ransomware is a type of computer malware that installs covertly on a victim's computer, disables the user's access to the computer's files, and then demands a ransom payment in order to restore the user's access. Some types of ransomware may covertly encrypt the computer's files with a secret key, and then demand a ransom payment in order to decrypt the files. This ransom demand may be presented to the user via a pop-up message or dialog box that informs the user his or her files have been ransomware affected with ransomware, and that the user may only restore access to the files by paying a specified amount of money to a certain online location. Since decrypting the encrypted computer files without the secret key may be difficult, expensive, and/or time-consuming for most users, many users may elect to pay the ransom payment in order to restore access. Notable examples of ransomware include CryptoLocker, Reveton, TorrentLocker, and CryptoWall, Locky, Wannacry, Bad Rabbit, Ryuk, Troldesh, Jigsaw, Petya, NotPetya, Goldeneye, GandCrab, Cerber, Crysis, CTB-Locker, KeRanger, LeChiffre, LockerGoga. Spider, TeslaCrypt, ZCryptor.

Some computer users attempt to mitigate the consequences of a malware infection (including ransomware) by periodically backing up the contents of their filesystems according to a regular schedule. If all or part of a filesystem is corrupted, encrypted, or infected by malware (such as ransomware), a user may restore a previous backup of the filesystem. While the user would lose all changes made to the filesystem since the previous backup, this is generally preferable to losing all or most of the files stored on the filesystem.

However, computers that periodically backup the contents of filesystems generally make space in memory for new backups by deleting older backup versions. For example, computers may delete one or more of the oldest, previously stored backup versions in order to make space for new backup versions. This process of deleting the oldest, previously stored backup versions may be referred to as "aging out" older backup versions. Knowing this, some types of ransomware will not announce its presence in a filesystem (e.g., by demanding the ransom payment) until a certain period of time (e.g., one week) has passed since the initial RW infection. This waiting period may ensure that all uninfected backup versions of a filesystem will have aged out before the user realizes that his or her files are infected.

Some types of ransomware may also take a significant amount of time to propagate throughout a filesystem. By not announcing its presence in a filesystem for a certain period of time, the ransomware can ensure that all or most of a filesystem is infected before the user becomes aware of the problem. Furthermore, some types of ransomware are programmed to attack outside of normal working hours when employees and/or IT staff are not working, for example weekends or outside normal working hours. This situation can make it difficult and time consuming to determine when an actual attack occurred, and consequently which previous backup to restore a system.

The present disclosure generally provides a design and implementation of a ransomware detection and isolation and/or remediation methods and systems that are an integrated part of a RMM system, wherein a RD/Isolation module is locally installed on a client's device, thereby providing a local and relatively rapid detection of potential ransomware on a device without the need to store and process potential target files remotely for ransomware detection. The local nature of the disclosed ransomware detection and isolation methods and systems, as compared to remote-server-based detection methods, provides an effective ransomware defense which detects potential ransomware attacks on a device, i.e., locally, prior to any infected/encrypted files being shared via a local or external network. In other words, the disclosed ransomware detection and isolation methods and systems effectively provide a real time solution for detecting ransomware.

According to an exemplary embodiment, a relatively small self-contained module installed on a client device which communicates with an RMM platform includes both a handler for OS file-events (windows/mac), and execution of ransomware detection methods as further described, at least in part, in commonly assigned patent applications U,S. Pub. No. 2018/0107824 filed October 17, 2017 and titled "SYSTEMS AND METHODS FOR DETECTING RANSOMWARE INFECTION"; U.S. Serial No. 16/431,188 filed June 4, 2019 and titled "METHODS AND SYSTEMS FOR DETECTING A RANSOMWARE ATTACK USING ENTROPY ANALYSIS AND FILE UPDATE PATTERNS"; and U.S. Serial No. 16/840,665 filed April 6, 2020 and titled "METHODS AND SYSTEMS FOR DETECTING RANSOMWARE ATTACK IN INCREMENTAL BACKUP,"

According to an exemplary embodiment, the RMM calls a RD dll call function to monitor and detect ransomware on the device itself, without having to go through a server. Specific benefits associated with this arrangement include, but are not limited to: 1) elimination of a need for a database for processing file-events because the processing of file-events happens in almost real time, locally; 2) faster ransomware detection as a result of eliminating network/server transmission delay; 3) faster ransomware detection as a result of increasing the rate/frequency of relevant file-event watching to, for example, 30s or less (the time between deltas). According to one exemplary embodiment, the time between deltas is 2 seconds. If ransomware is detected, the RMM host application can take appropriate actions, including providing isolation script to the device agent to run locally thereby providing isolation of the infected machine from internal and external networks and drives. According to an exemplary embodiment, the isolation script run by the device agent closes all ports to the device, except for a dedicated communication network channel to the RMM platform to provide MSP access to the infected device for further action by the MSP. If the device is being backed up when ransomware is detected, in many cases, the backup is stopped before any damage or corruption can be done to the backup data.

A file-sync and share service can be especially sensitive to ransomware attacks, because the files being encrypted by the ransomware are quickly disseminated to other users via a cloud server, potentially leaving a company without all its important documents, spreadsheets etc., until a restore from previous versions has been performed and completed. If an attack can be detected quickly, the infected device can be disconnected automatically, and actions can be taken to revert the changes made by this device.

While the ransomware detection exemplary embodiments described herein are of particular importance to RMM systems, backup products/services and file-sync-share products/services, it is to be understood that the disclosed ransomware detection and isolation methods and systems are also applicable to other products/services/systems that include the processing and/or storage of computer related files, e.g., file transfer/storage applications, other computer file utility applications, etc.

As disclosed, in part, in commonly assigned patent applications U,S. Pub. No. 2018/0107824 filed October 17, 2017 and titled "SYSTEMS AND METHODS FOR DETECTING RANSOMWARE INFECTION"; U.S. Serial No. 16/431,188 filed June 4, 2019 and titled "METHODS AND SYSTEMS FOR DETECTING A RANSOMWARE ATTACK USING ENTROPY ANALYSIS AND FILE UPDATE PATTERNS"; and U.S. Serial No. 16/840,665 filed April 6, 2020 and titled "METHODS AND SYSTEMS FOR DETECTING RANSOMWARE ATTACK IN INCREMENTAL BACKUP," the disclosed exemplary RMM ransomware detection methods and systems use several types of analysis to determine whether or not a ransomware attack or infection is occurring.

At a high level, the methods and systems exploit features of ransomware to detect its effects on a filesystem. First, ransomware tends to target only specific file types (e.g., ransomware target file types) within certain filesystem directories (e.g., active user directories) for infection, while leaving other types of files and/or other directories unaffected. Second, since ransomware generally encrypts the files that it infects, and since encryption will increase the randomness of an infected file's contents, a ransomware-encryption can be detected by measuring the entropy (i.e., randomness or information density) of a file, or a collection of files. As used herein, "entropy" refers to any measure or indication of randomness or information density, and references to the "entropy" of one or more files refers to any measure or indication of the randomness or information density of all or part of the one or more files' contents. Entropy can be measured or indicated using various types of metrics or tests, including, but not limited to, Shannon Entropy, Monte Carlo pi approximations, Chi-Squared tests, or by computing one or more mean byte values. If the measured entropy indicates a high degree of randomness in the contents of the file (or collection of files), this can be an indication that the file(s) have been infected with ransomware. Third, ransomware tends to exhibit other characteristics which are described below.

The disclosed ransomware detection entropy calculations may use or omit certain parts of files. High and low entropies for portions of files are calculated and compared to thresholds, and also examined as ratios. The entropy analysis disclosed can be configured to be file size dependent to provide more precise entropy values. A weighted hint in the update analysis is provided by a relatively small database maintained with a subset of known, common filetypes and associated extensions, and an indication of the use of particular file types for a file, as well as whether the file types are known or unknown. A file update pattern is analyzed on a server by means of a "watcher," that monitors file commands arriving from a computing device via its agent module, according to an exemplary embodiment, which communicates with the server. If an update pattern receives a 'score' higher than a certain threshold, an alert is triggered. False-positive detections of encrypted files can be minimized further with the use of an exclusion list that includes known encrypted file types that are not considered a threat.

After a file is determined to be encrypted, the watcher can monitor the behavior or characteristics of other files and other file commands, encrypted and unencrypted, to determine if a ransomware attack or ransomware-encryption is potentially occurring. The 'other files' monitored are generally associated in some manner with the file determined to be encrypted and include, but are not limited to: 1) files received by a server from an associated agent module or client device for synchronization, sharing and/or storage, 2) files received or associated with a particular or common time frame or location, 3) files sharing a common processing queue, etc. The 'other file commands' monitored include, but are not limited to, one or more of, copy, replace, delete and move file commands.

The essential characteristics of a ransomware attack (RWA) can be described as including, but not limited to, the following:
a) files containing user data are the main target (as opposed to system files or files that can easily be restored by reinstalling, etc.);
b) targeted files are replaced by encrypted files, with a new name and/or extension. Ransomware notes are often added to each folder;
c) the encryption of files happens in rapid succession, or at least in bursts of hundreds of files; and
d) a strong encryption algorithm is used.

**The** components of the RWA detection methods and systems described herein include:
1) a method for detecting if a file is encrypted; and
2) a method for analyzing a file update pattern associated with a plurality of files, in as close to real-time as possible.

It is the combined use of these two methods that generates a strong indicator of a ransomware attack in progress.

### Detection of encrypted files

Files that have been encrypted by a strong encryption algorithm will exhibit a high 'randomness' of its content. Shannon entropy is a well-known method in information theory for measuring the level of randomness, or disorder of a sequence of values. According to the disclosed encryption detection method, files are analyzed at the byte-level, so the result of computing entropy on the content of a file yields a number between 0 and 8, where 8 indicates the highest level of randomness. Highly compressed files, e.g., zip archives, also exhibit high randomness, but they usually have some level of internal structure rather than being completely random.

An issue associated with computing entropy for a file, and similar methods for measuring randomness, is that existing entropy calculation methods are effectively "low-pass filters." In other words, the larger the files are, the less importance is given to small local areas that contains some kind of structure or relatively nonrandom information. Consequently, ordinary compressed files which are not associated with a will often be computed by existing entropy calculation methods as having a very high entropy; often between 7.98 and 8.00. According to this disclosure and the exemplary embodiments described herein, methods and systems of calculating the entropy and/or randomness are provided which account for the low frequency characteristics and high frequency characteristics of the byte value distributions associated with a file, thereby providing a more intelligent and accurate ransomware detection method which considers small local areas with some kind of internal structure in order to eliminate false-positive detections of a RWA based on a non-threating highly compressed file, e.g., zip archives.

With reference to FIG. 1, shown is a block diagram of a RMM system, including ransomware detection and isolation as disclosed herein, the RMM system operatively associated with monitoring and managing a plurality of devices. The RMM system includes a RMM agent module locally installed on each device which operatively communicates with an operating system (OS) installed on each device, a cloud-based RMM platform operatively communicating with each device RMM agent module, the cloud-based RMM platform configured for a MSP to monitor and manage each of the plurality of devices, and a Ransomware Detection (RD) and Isolation module locally installed on each device and operatively communicating with each respective device agent module, the RD and Isolation module configured to detect a potential ransomware-encryption in a device and isolate the ransomware affected device according to an exemplary embodiment of this disclosure.

The RMM system illustrated, as an example, includes Company ABC site **102;** a Company DEF site **104;** a common Cloud Platform **106;** and an Internet/External Network **108** which provides communications to RMM Platform **180** and a Managed Service Provider (MSP) **109.** While the RMM system described herein is architecturally represented by FIG 1, it is to be understood the RMM system is scalable to 10s, 100s and 1000s of client sites. In addition, each client site is not limited to a Device 1 and Device 2 as shown, but can include 10s, 100s and 1000s of devices, each device including a RMM agent as will be described herein.

Company ABC site **102** includes Client ABC Device 1 (Local Endpoint) **110;** Client ABC Device 2 (Local Endpoint) **112;** and a Local/External Network **114** which enables communications on a local network as well as an external network. Client ABC device 1 includes RMM Agent 120; Operating System (OS) **122;** Network Adapter **124;** RD Module 126; and Isolation Module **128.** Client ABC device 2 includes RMM Agent **130;** Operating System (OS) **132;** Network Adapter **134;** RD Module **136;** and Isolation Module **138.**

Company DEF site **104** includes Client DEF Device 1 (Local Endpoint) **150;** Client DEF Device 2 (Local Endpoint) 152; Local/External Network **154** which enables communications on a local network as well as an external network. Client DEF device 1 includes RMM Agent **160;** Operating System (OS) **162;** Network Adapter **164;** RD Module **166;** and Isolation Module **168.** Client DEF device 2 includes RMM Agent **170;** Operating System (OS) **172;** Network Adapter **174;** RD Module **176;** and Isolation Module **178.**

In operation, a MSP 109 accesses Company ABC devices and Company DEF devices using a RMM platform portal which is hosted by a cloud-based infrastructure service, such as but not limited to, Amazon Web Services, Microsoft Azure, and Google Cloud. The RMM platform portal and associated RMM MSP user interface provide the MSP with the ability to monitor and manage client devices, including patch management, automation of tasking for devices utilizing libraries of scripts, generating device/site IT reports, remote access of devices, etc. In addition, the RMM portal provides the MSP with the ability to schedule and initiate backups of client devices if the RMM is integrated with a backup cloud-based service.

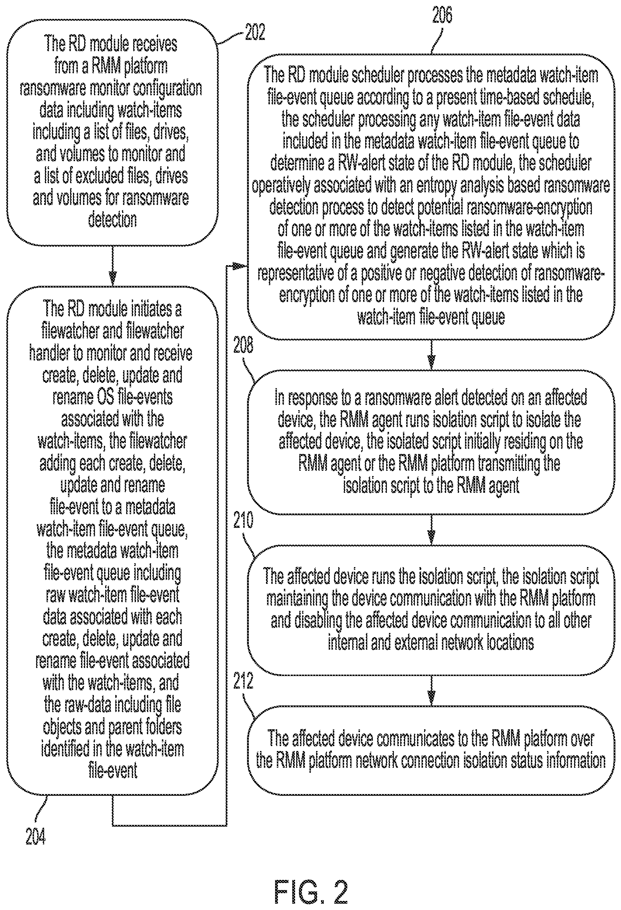

With reference to FIG. 2, shown is an operation flow chart of a ransomware detection and isolation method incorporated into the RMM system shown in FIG. 1. The description provided below references Client ABC Device 1, however it is to be understood that the operation of the RMM RD module and/or Isolation module is applicable to any client device in the RMM system.

At step 202, the RD module 126 receives from a RMM platform 180 ransomware monitor configuration data including watch-items including a list of files, drives, and volumes to monitor and a list of excluded files, drives and volumes for ransomware detection. During this step, the RD module 126 communicates with the RMM agent 120 utilizing an API (Application Programming Interface) which in turn communicates via network adapter 114 and a wide area network 108, such as the internet, to the cloud-based RMM platform 180 hosted by a cloud-based infrastructure service 106.

At step 204, the RD module 126 initiates a filewatcher and filewatcher handler to monitor and receive create, delete, update, and rename OS file-events associated with the watch-items, the filewatcher adding each create, delete, update and rename file-event to a metadata watch-item file-event queue, the metadata watch-item file-event queue including raw watch-item file-event data associated with each create, delete, update, and rename file-event associated with the watch-items, and the raw-data including fileobjects and parent folders identified in the watch-item file-event. According to the exemplary embodiment described, the OS file events are provided by the I/O of an OS, such as a MICROSOFT WINDOWS NET framework, i.e., the filewatcher and the RD module filewatcher handler accesses the filewatcher data provided by the OS filewatcher I/O. While the exemplary embodiment described herein is in the context of a WINDOWS-based client device operating system, it is to be understood that other client device operating systems, such as macOS, UNIX, and Linux, are applicable

At step 206, the RD module 126 scheduler processes the metadata watch-item file-event queue according to a preset time-based schedule, such as every 10 seconds, the scheduler processing any watch-item file-event data included in the metadata watch-item file-event queue to determine a RW-alert state of the RD module. To determine a RW-alert state, the RD module scheduler is operatively associated with an entropy-analysis-based ransomware detection process to detect potential ransomware-encryption of one or more of the watch-items listed in the watch-item file-event queue and generate the RW-alert state which is representative of a positive or negative detection of ransomware-encryption of one or more of the watch-items listed in the watch-item file-event queue.

At step 208, in response to a ransomware alert detected by the RMM agent 120 on a ransomware affected device, the RMM agent 120 runs isolation script to isolate the ransomware affected device, the isolated script initially residing on the RMM agent or the RMM platform 180 transmitting the isolation script to the RMM agent.

At step 210, the ransomware affected device runs the isolation script, the isolation script maintaining communication of the ransomware affected device with the RMM platform and disabling all communications of the ransomware affected device with other internal and external network locations.

At step 212, the ransomware affected device 110 communicates to the RMM platform 180 over the maintained RMM platform network connection isolation status information.

As will be further described below, steps **210** and **212** effectively isolate the affect device from any local and external network communication with any other device, thereby preventing the corruption/infection of other networked devices. In operation, this includes:
a) changing the affected device network information pertinent to the affected device network connection to the RMM platform from a temporary DHCP (Dynamic Host Configuration Protocol) IP address assignment to a static IP address assignment, the network information including one or more of an internal IP (Internet Protocol) address of one or more active network adapters, inactive network adapters, a subnet mask of the one or more network adapters, a default gateway assignment of the one or more network adapters;
b) nullifying local network and external network information on the affected device rendering the affected device unable to access any internal and external network, the nullified local and external network information including one or more of DNS (Domain Name System) server assignments for associated network adapters, default gateways of the associated network adapters, routing table of the affected device, routing information base of the affected device, ARP (Address Resolution Protocol) cache and NetBIOS cache; and
c) re-adding to the affected device routing table the pertinent network information changed to an unchanging DHCP configuration in step b1) directly linking the default gateway IP stored in step b1) to reestablish a network connection from the affected device to the RMM platform , the re-added network information including one or more of IP addresses for a partner RMM geographical platform, DNS servers, and the affected devices' HOSTS file.

With reference to FIG. 3, shown is a block diagram of a RMM (Remote Monitoring and Management) system, including ransomware detection and isolation, according to an exemplary embodiment of this disclosure. The RMM system is operatively associated with monitoring and managing a plurality of devices and the RMM system includes a RMM agent module locally installed on each device and operatively communicating with an operating system (OS) installed on each device, and a cloud-based RMM platform operatively communicating with each device RMM agent module. The cloud-based RMM platform is configured to monitor and manage each of the plurality of devices, and a Ransomware Detection (RD) module is locally installed on each device and operatively communicates with each respective device agent module. The RD and Isolation module detects a potential ransomware-encryption and isolates an infected device as described below.

### Description of Steps:

1) **310** The RMM agent **120** connects to RMM platform **180** and requests/receives a ransomware definition **330/334** from a ransomware monitor definition database **332.** The ransomware definition includes, but is not limited to, configuration data including one or more watch-items including a list of one or more files, drives, and volumes to monitor for ransomware detection. In addition, the configuration data may include an exclusion list of one or more files, drives, and volumes to exclude from monitoring for ransomware detection. The ransomware monitor configuration data can be updated on the RMM Agent at any time via the RMM platform.
2) **312** The RMM agent **120** initiates the locally installed device RD module **334** with the supplied configuration data and the RD module **334** begins monitoring watch-items including the provided list of files, drives and volumes for ransomware, for example, using entropy-based methods to determine the likelihood of encryption of a plurality of files, and file update pattern analysis. In the event the RD module **334** detects a possible ransomware-encryption or Ransomware Attack (RWA), the RD module **334** sets a detection state of the module to indicate a RW-alert.
3) **314** The RMM Agent **120** monitors the ransomware detection state of the RD module held in a memory according to a preset time-based schedule provided by the RMM platform provided configuration data or other manner. For example, every 1 second, but practically can be any time specified, for example, 1-20 seconds **336.**
4) **316** In the event the RD-module state indicates a RW-alert, the RW-alert is reported to the RMM platform over a network to notify the MSP/monitoring service **302** using the configuration data provided by monitoring service configuration data **338.** The RW-alert report includes, but is not limited to, one or more of the ransomware affected directories, a confidence metric value or representation that a RWA has occurred, file extensions affected, time of the meta and actual alert. The RMM platform notifies people and systems as configured in RMM monitoring configuration data **338.**

In addition, in the event the RD-module state indicates a RW-alert, the RMM agent **120** initiates a response **318,** including device network isolation **340.** In other words, the ransomware affected device is isolated from all internal and external networks, with the exception of maintaining a network connection with the RMM platform **180,** for example, via the internet to maintain RMM management functions for remedial service **342.**

Provided below is a code snippet, according to an exemplary embodiment of this disclosure, for a RMM Agent module including RWA detection and isolation methods as described herein.

| |
|---|
| ```
 let createObservable perfmonInstances perfmon (definitions: List<RansomWare>) () =
  Observable.Create
  (fun (obs:lobserver<_>) ->
   let api = RWDetectCore.RwDetectAPI(true, RWDetectCore.RwDetectAPI.Ostype.Windows)
   let alertSubject = new Reactive.Subjects.Subject<_> ()
``` |
| ```
   do api.SubscribeAlertNotification (fun _ -> alertSubject.OnNext())
   let toplO = IOMonitoring.topThreelOProcessinstances perfmonlnstances perfmon
   do savedAPI.Post (SaveAPI (api,toplO))
   do definitions \|> Array.ofSeq \|> (setAPllnputs api)
   let apiDisposable = Disposable.Create (fun () -> try api.RwDetectExit () with \|_ -> ())
   api.setExternalLogger (Logging.Logger ())
   Observable.combineLatest
    (Observable.observeOn (Reactive.Concurrency.Scheduler.Default) alertSubject)
    (Observable.interval (TimeSpan.FromSeconds 1.))
   \|> Observable.map
    (fun _ ->
    let alert = api.getAlertInfo()
    {
     state = alert.alertState
     confidenceFactor = alert.confidencefactor
     rwextension = alert.rwextension
     mentalities = alert.metaAlertTime
     alertTime = alert.alertTime
     deleted = List.ofSeq alert.deletedFiles
     encrypted = List.ofSeq alert.possibleEncryptedFiles
     watchPaths =
      defaultArg (api.getWatchPaths () \|> Option.ofObj \|> Option.map List.ofSeq)
      []
    })
   \|> Observable.distinctUntilChanged
   \|> Observable.subscribeWithCallbacks obs.OnNext obs.OnError obs.OnCompleted
   \|> (fun t -> new CompositeDisposable([t; apiDisposable ]) :> Idisposable))
  \|> Observable.publish
  \|> Observable.refCount
``` |

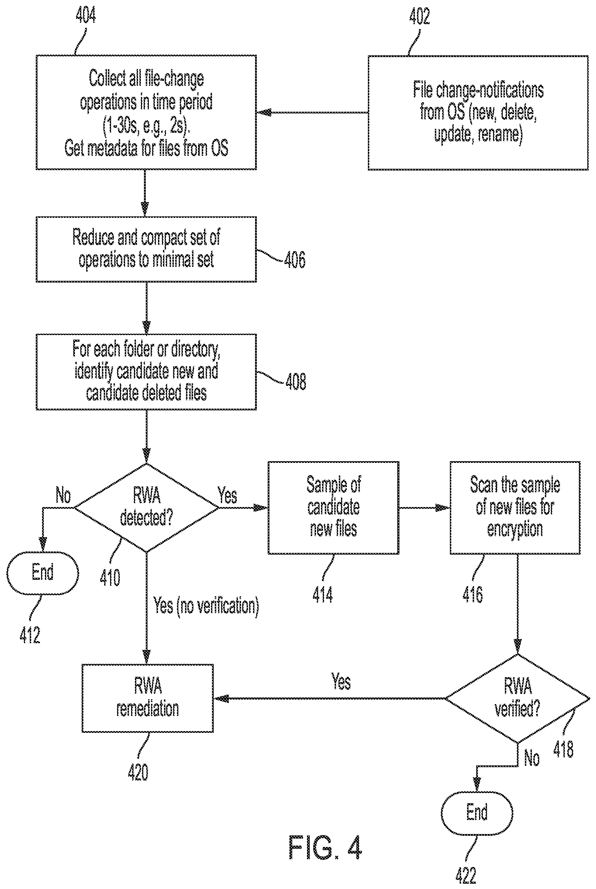

With reference to FIG. 4, shown is a flow chart of a ransomware detection method incorporated into a RD module according to an exemplary embodiment of this disclosure. Specifically, the ransomware detection shown includes one example of a ransomware detection method implemented into the RD module **336,** the ransomware detection method including the following steps:
At step **402,** the RD method receives/accesses file change-notifications from the OS (new, delete, update, rename).
At step **404,** the RD method collects all file-change operations [provided by the OS for a predetermined time-period, for example 1-30s, and gets metadata for the respective files from the OS.
At step **406,** the RD method reduces and compacts the OS provided set of operations to a minimal set.
At step **408,** the RD method identifies for each folder or directory, candidate new and candidate deleted files.
At step **410,** the RD method determines if a potential RWA is detected.
If no potential RWA is detected, at step **412,** the RD method ENDs.
If a potential RWA is detected, at step **414,** the RD method generates a sample of candidate new files for further processing for RWA detection.
At step **416,** the RD method scans the sample of new files for encryption.
At step **418,** if the sample of new files are determined to not be encrypted, the method proceeds to step **422** and ends. If the sample of new files are determined to be encrypted, the method verifies a potential RWA has occurred and proceeds to step **420.**
At step **420,** the RD method initiates RWA remediation for the affected device.
At step **422,** the RD method Ends.

Provided below is a code snippet, according to an exemplary embodiment of this disclosure, for a RWA detection method as described herein.

| |
|---|
| ```
 // Do this every n seconds, if the raw event-queue is not empty
  DateTime startTimeD = DateTime.Now;
  List<FileWatchitem> listNew = fwList.CompactList(fwList.emptyListRaw()); // Collapse events to
 minimum: rawlist -> compactList
 durCompact = (int)(DateTime.Now - startTimeD).TotalMilliseconds;
 if (fwList.fileListCompact == null ∥ fwList.fileListCompact.Count == 0)
   fwList.fileListCompact = listNew;
  else
   fwList.fileListCompact = fwList.fileListCompact.Concat(listNew).ToList();
 startTimeD = DateTime.Now;
 List<FileWatchitem> useList = (fwList.ss == null) ? fwList.fileListCompact : listNew;
 ResultState.eventResult res = fwList.evaluateMetaData
(useList, inAlertState); // evaluate meta-data,
``` |
| ```
 compactList -> alertState -> -init ss,
 durEval = (int)( DateTime.Now - startTimeD).TotalMilliseconds;
  if (!(rwAlert.alertState == RwAlert.AlertState.FullAlert)
 && res == ResultState.eventResult.alert)
  { /* Metadata-alert- check for full alert by evaluating file-content of sample */
   try
   {
    rwt.pauseExecution(); // Pause handling of incoming events
    rwAlert.setMetaAlertInfo(fwList.ss);
    startTimeD = DateTime.Now;
    res = fwList.evaluateFileContent();
    if (res == ResultState.eventResult.alert)
    { /* Full alert , RWA-detected */
     checkNewProcessesTimely(true);
     rwAlert.proccesNames = findNewProcceses(fwList.ss.getDetectionTime(), 45 * 1000,
     fwList.ss.getDetectionTime());
     rwAlert.setFullAlert(fwList.ss); // Extract alert-info
     25as Alert = true;
     doAlertCallback(); // Notify RMM with alert-info
   }
   durEvalFile = (int)(DateTime.Now - startTimeD).TotalMilliseconds;
 }
 catch (Exception e)
 {
   LoggerMgt.LogException("RwDetectAlert-fullalert", e);
 }
 finally {
   if (25as Alert)
    rwt.pauseExecutionWhileAlert(); // State can hereafter only be cleared via api.
   Else
    rwt.resumeExecution(); // Resume handling of events
 }
 }
 else
 {
  if (fwList.ss == null)
   clearListTimely();
 }
``` |

With reference to FIG. 5, shown is a block diagram of another RMM (Remote Monitoring and Management) system operatively associated with monitoring and managing a plurality of devices, including ransomware detection, the RMM system including a RMM agent module locally installed on each device and operatively communicating with an OS (operating system) installed on each device; a cloud-based RMM platform operatively communicating with each device RMM agent module, the cloud-based RMM Platform configured to monitor and manage each of the plurality of devices; and a RD (Ransomware Detection) module locally installed on each device and operatively communicating with each respective device RMM agent module.

As shown, the RM agent API **502** (**120/126**) includes a RD module I/O interface for the RMM agent to control the RD module to Initialize **510,** Start **512,** Stop **514,** Clear/Rest **518** the RD-module state and Exit **522.** In addition, the RD module I/O interface includes the ability for the RD module to request information, i.e., Getlnfo **516,** from the RMM agent **120,** provide RD-module state information **520** to the RMM agent, and provide a RW-alert signal to the RMM agent module. Other software components of the RD module include: Setup Watcher **532;** FileWatcher Handler **534;** Metadata EventQueue **536;** Scheduler **538;** Create Snapshot **540;** Collapse Events **542;** RW Analyzer **544; Check** File Encryption **548;** RD module State detector **550;** Release Resources **554;** LogFile **562** and ConfigFile **564.**

Also, as shown, the OS I/O **504** (e.g., .NET) provides the RD module access to information, including MetaData **509** related to OS file events **506/507** associated with the OS File System **508** using the OS FileSystemWatcher **506.**

### Setup FileWatcher 532 to monitor System-filechange file-events

A list of folders/drives to watch is supplied, for example: {"c:\", "d:\", "x:\"} . A SystemFileWatcher is initialized for each watch-item, with callback functions in FileWatcherHandler.

A list of subfolders to be excluded is supplied, for example: {"AppData", "Windows", "/$recycle.bin" "Program Files"...}. For a WINDOWS-based OS, subfolders cannot be excluded from the SystemFileWatcher, so file-events from these folders are filtered out in the FileWatcherHandler **534.**

### FileWatcherHandler 534

Receives callbacks for create, delete, update, rename file-events, for updates in the folders specified above. File-events are ignored if inside excluded folders.

### File-events are added to the MetaDataEventQueue 536

### Metadata file-event queue 536

This queue contains the raw-event data. Additional metadata-info is retrieved, and misc. in-memory lookup-tables are maintained as events are added. Fileobjects and parent folders identified in the events are assigned ids. Simple collapsing of update-events to a single file is also performed. In other words, a new file on a volume will result in create+update+update... file-events which are collapsed to a single create file event.

### Scheduler 538

The Scheduler generates timer events every (preset) number of seconds, for example, but not limited to, every 10s. At each timer event, the Scheduler checks the Metadata Event queue **536,** and if it contains any information, it extracts the info (delta), and clears the Metadata Event Queue **536.** Then the RD module processes the information (steps Collapse Events **542,** RW Analyze Events **544** and Check FileEncryption **548**) until it reaches a conclusion indicating an "abort", "continue" or " RW-alert" RD-module state **520.**

In most cases, the abort conclusion is reached in the very beginning of this process. If the process is aborted the RD-module state 520 is cleared **518/552.**

In some cases, a conclusion cannot be reached, so the RD-module state **520** carries over to the next timer event and delta.

If the conclusion is a RW-alert, a notification **516** is sent back to the calling application, for example the RMM agent, with information about the file-event, including but not limited to a list of the suspected files and the deleted files.

### Collapse file-events 542

Before the file-events in the delta are processed, they undergo a transformation to simplify the sequence of file-events.

Creating and modifying office files, for example, creates a long sequence of file-events, involving renames to temporary files etc. Such a sequence can be simplified to a single 'create' or 'update' event.

RW-Analyze file-events for possible Ransomware attack **544**

The Metadata for the events included in the simplified delta **542** are analyzed in a way similar to the description in pending patent application "METHODS AND SYSTEMS FOR DETECTING RANSOMWARE ATTACK IN INCREMENTAL BACKUP". The steps include identifying any candidate files and folders that have an update pattern typical of a ransomware attack.

### Check file encryption status 550

This step tests a small sample of suspicious files identified as having an update pattern typical of a ransomware attack in **544,** if any. According to one exemplary method, it uses entropy-based calculation methods for determining the encryption status of the suspicious files. According to another exemplary embodiment, it uses a High Frequency/Low Frequency entropy-based method as described in pending application "METHODS AND SYSTEMS FOR DETECTING A RANSOMWARE ATTACK USING ENTROPY ANALYSIS AND FILE UPDATE PATTERNS."

While the following configuration data is only one example, a minimum of 10 files is tested by reading up to 256k from each, and relatively small files are ignored. If most of the suspicious files are encrypted (> 75%), the RD module issues an RW-alert.

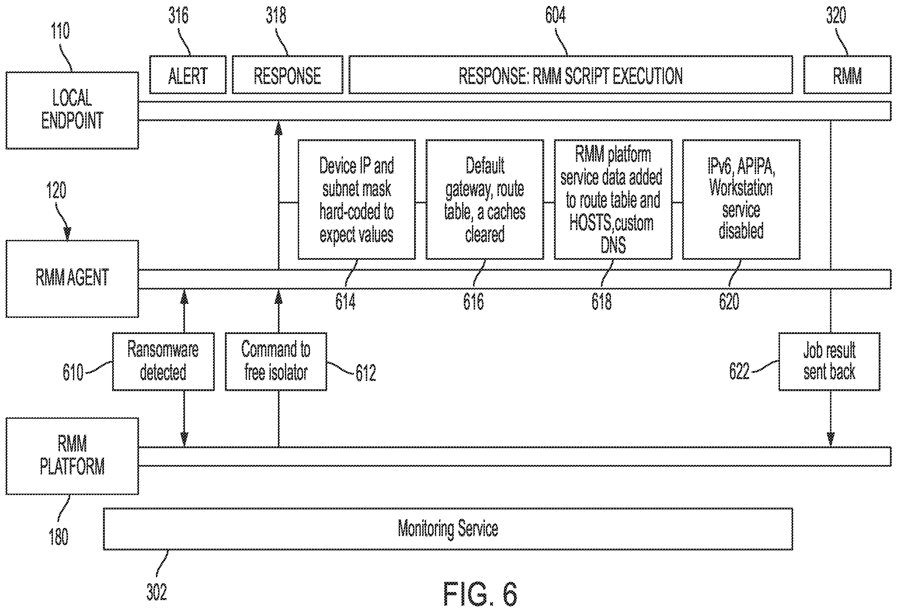

With reference to FIG. 6, shown is a block diagram of a Ransomware Detection (RD) and Isolation module operatively associated with a cloud-based RMM (Remote Monitoring and Management) platform for monitoring and managing a plurality of devices. The method leverages the WINDOWS command interpreter to disable access to all internal and external network locations, with the exception of the RMM service. Initially, the endpoint client device **110** receives a command **612** from the RMM platform **180** to "begin isolation" **612** in response to the RD module detecting a RWA or potential RWA **610,** i.e., RW-alert **316,** at which point script execution **604** as described below is run by the Isolation module/RMM agent **120,** for example using MICROSOFT PowerShell.

Step 1) **614** Information pertinent to the device's network connection is changed from a temporary configuration ("temporary" within the context of DHCP) to a hard-coded, unchanging configuration, whilst other information is stored. In other words, changing the affected device network information pertinent to the affected device network connection to the RMM platform from a temporary DHCP (Dynamic Host Configuration Protocol) IP address assignment to a static IP address assignment. The network information may include an internal IP (Internet Protocol) address of one or more active network adapters and inactive network adapters ("The Adapters"), a subnet mask of the one or more network adapters, and a default gateway assignment of the one or more network adapters.

Step 2) **616** Information the device uses in order to connect to both the local network and the wider internet network is nullified, rendering the device unable to access anything via the network. This networking information may include: the DNS server assignments for The Adaptors; the default gateway of The Adaptors; the device's routing table/routing information base; and ARP (Address Resolution Protocol) and NetBIOS caches.

Step 3) **618** Information relevant to maintain a connection to the RMM platform service is re-added to the device's routing table, linking directly to the default gateway IP stored in Step 1) in order to help re-establish a connection for maintenance purposes. This networking information may include: the IP addresses for the RMM platform partner geographical platform assignment; DNS servers; and the device's HOSTS file.

Step 4) **620** Additional steps are taken on the device to further reduce the possibility of unauthorized network connections coming to or from the device. These steps may include disabling Ipv6 access on the device utilizing, for example, MICROSOFT NVSPBind tool; disabling WINDOW's APIPA service; and disabling WINDOW's Workstation Service to block access to network drives.

Step 5) **622** As the connection to the RMM platform has been preserved, the status of the isolation job is sent back to the RMM platform by the RMM agent **320.** The device is now only able to communicate with the RMM platform and will be unable to access the greater internet or communicate with any other device on the local network beyond the gateway itself.

Another more detailed description of the isolation method provided herein is provided below, according to an exemplary embodiment of this disclosure.

In response to a Ransomware alert **316,** RMM platform **180** responds by running Isolation script on the ransomware affected an endpoint device ("the device") **110.**

Isolation script is transmitted via the RMM platform **180** to the device 110 and executed using WINDOWS PowerShell command interpreter **604.**

The Isolation script performs the following actions:
- Ascertains which geographical RMM platform is being used and collects the relevant IP addresses for this platform into a "routing list" and adds the IP address for the OpenDNS service to the "routing list" **614.**
- Configures the device, via the WINDOWS NetSH tool, to use the currently assigned internal IP address as a static assignment with the subnet mask of 255.255.255.255. **614.**
- Removes all pre-configured DNS server information from the device **616.**
- Adds the IP address of a DNS server from the OpenDNS to the device's DNS pool **616.**
- Flushes, using the WINDOWS Route tool, the device's routing table **616.**
- Removes the device's assigned default gateway, storing the setting **616.**
- Adds each IP address from the "routing list" to the device's local routing table, with a link directly to the IP address from the device's default gateway setting with a subnet mask of 255.255.255.255, so ensuring a direct link between RMM platform servers and the gateway, whilst removing the 'default gateway' assignment, thus nullifying all connectivity between the device and any other network service - internal or external - outside of the RMM platform **616.**
- Using the WINDOWS Registry, disables the APIPA service, forcing the device to use the settings given to it by the script instead of attempting to use more practical ones **616.**
- Disables and stops the MICROSOFT "LanMan Workstation" service, removing the device's capability to access mapped network drives **616.**
- Using WINDOWS' NetSH and NBTStat tools, clears the ARP and NetBIOS caches from the device **616.**
- Creates a new HOSTS file on the device with a link to the Job Server for the device's geographical RMM Job Server, swapping out (and thus decommissioning) any pre- existing HOSTS file on the device, ensuring the device can access RMM platform (The new HOSTS file contains, in part, 1 line linking the regional Job Server URL to its IP address) **618.**
- Disables Ipv6 connectivity on the device, for example using MICROSOFT NVSPBind tool, ensuring only Ipv4 internet connectivity **620.**
- Stores all configuration data from the device's active internet adaptor/s in the Registry for safe keeping **620.**

At this point the device can only communicate via the network with the RMM platform; no other connectivity, internally within the network or externally via the internet, is possible.

Provided below is a first code snippet demonstrating how IPv6 functionality is disabled on network adaptors targeted by an isolation procedure, according to an exemplary embodiment of this disclosure.

| |
|---|
| ```
 #disable ipv6 for this adaptor
 if ($script:NVSP) {
     cmd /c "$env:TEMP\nvspbind-exe.exe /d '"$activeID'" ms_tcpip6" \| out-null
     if ($LASTEXITCODE -eq 0 -or $LASTEXITCODE -eq 13) {
         $varlPv6Disabled='false'
         write-host "- Disabled IPv6"
     } elseif ($LASTEXITCODE -eq 11) {
         $varlPv6Disabled='true'
         write-host "- Disable IPv6: Unnecessary (Already disabled)"
     } else {
         $varlPv6Disabled='true'
         write-host "- Disable IPv6: Unknown status"
     }
 } else {
     write-host "- Disable IPv6: Failed (No NVSPBind binary)"
``` |

Provided below is a second code snippet demonstrating how wireless adaptors, post-isolation, are re-connected after the initial isolation process disconnects the wireless adapters, according to an exemplary embodiment of this disclosure.

| |
|---|
| ```
 #re-enable wireless adaptor
 if ($varlsWireless) {
     cmd /c schtasks /create /sc once /tn RMM-Reconnect /tr "netsh wlan connect
 name=\'"$varSSID\'" interface=\'"$activeType\'"" /st
 $(get-date (Get-Date).AddMinutes(2) -UFormat
 %R) /RU SYSTEM /F /v1 /z \| Out-Null
     write-host "- This network interface is a Wireless adaptor."
     write-host " The isolation process may cause it to briefly lose its connection."
 }
``` |

Provided below is a third code snippet demonstrating how network adaptors that are not being used are disabled in order to prevent WINDOWS rolling over to these network adapters post-isolation, according to an exemplary embodiment of this disclosure.

| |
|---|
| ```
 write-host "- Disabling inactive NICs, to prevent switchover:"
 foreach ($adaptor in Get-WmiObject -Class Win32_NetworkAdapter) {
  if ($adaptor.GUID -match $script:varNotDisabled) {
   #do nothing
  } else {
   if ($adaptor.GUID) {
     write-host ": $($adaptor.NetConnectionID) [$($adaptor.Name)]"
     $script:varDisabled+="^$($adaptor.GUID)"
     try {
      $adaptor.disable() 2>&1>$null
      cmd /c "$env:TEMP\nvspbind-exe.exe /d '"$($adaptor.GUID)'" ms_tcpip" \| out-null
      cmd /c "$env:TEMP\nvspbind-exe.exe /d '"$($adaptor.GUID)'" ms_tcpip6" \| out-null
     } catch [system.exception] {
      #do nothing
     }
   }
  }
 }
 if ($script:varDisabled.Count -eq 0) {
  write-host ": No inactive NICs found to disable."
 }
``` |

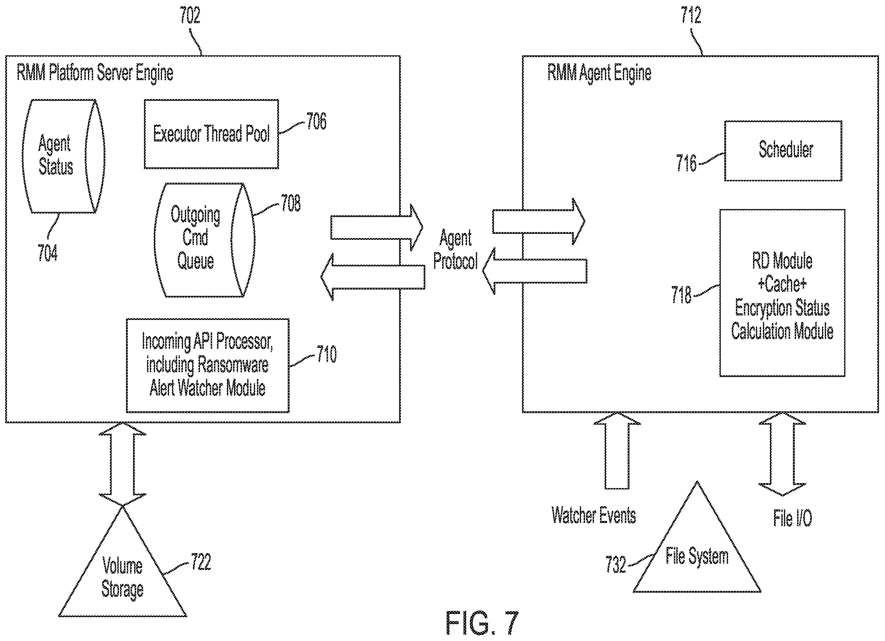

With reference to FIG. 7, shown is a block diagram of an RMM server and agent architecture including a ransomware detection and isolation module according to an exemplary embodiment of this disclosure.

As shown, the architecture includes a RMM platform server engine **702,** an RMM agent engine **712** and an agent protocol to facilitate communications between the RMM platform server engine **702** and agent engine **712.** The RMM platform server engine **702** includes an agent status module **704;** an executor thread pool **706,** an outgoing command queue **708,** and an incoming API processor **710** including a ransomware alert watcher module. The RMM platform server engine may be operatively associated with a volume storage device **722.**

The RMM agent engine **712** includes a scheduler **716** and a RD detection module/cache/encryption status calculation module **718.** The RMM agent engine **712** is operatively associated with an OS file system **732** to monitor and detect watcher events and facilitate file I/O between the OS file system and the RMM agent engine 712.

According to an exemplary embodiment, encryption status detection/entropy parameters are calculated on the RD module which resides on a hardware or software implemented desktop-agent. These values are calculated when confirming a possible ransomware attack as indicated in Fig. 4 (**416**). A list of filenames/paths possibly affected by a ransomware attack is included in the RWA alert information provided by the RD module. The RMM platform API processor provides ransomware and watcher configuration parameter data for the agent. It is to be understood that the encryption/entropy calculations and watcher can both reside on a client device, such as desktop computer, PC, etc. Furthermore, the encryption/entropy calculations, watcher and isolation methods described herein can both reside on a server or other device which receives files from one or more client devices over a network.

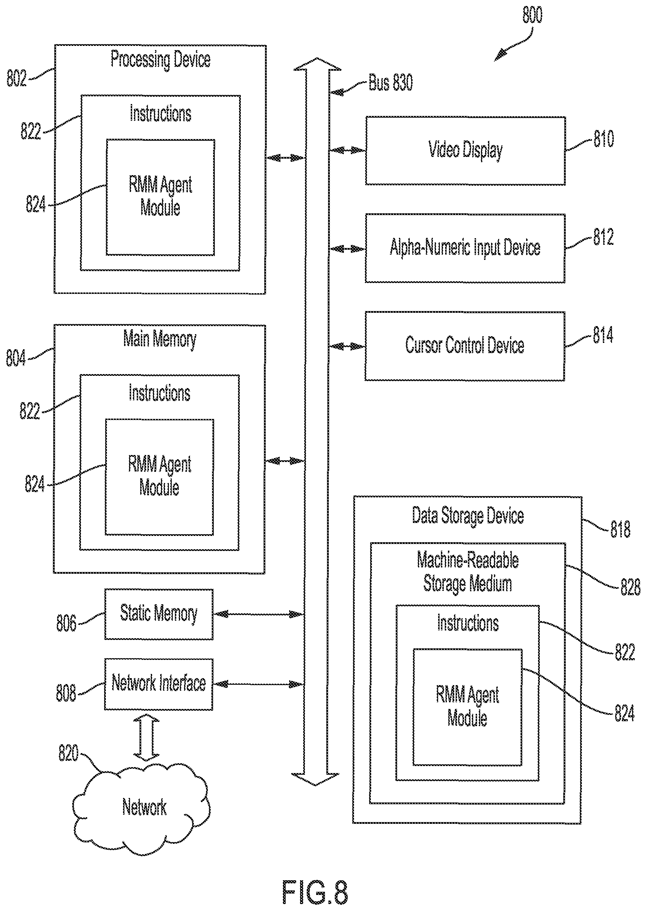

With reference to FIG. 8, shown is a block diagram of a computer system with a set of instructions to perform a ransomware detection and isolation method for causing the machine to perform any one or more of the methodologies discussed herein, may be executed. For example, client devices, agent modules, RMM platform server, and/or Storage Servers may be implemented on machines similar to computer system **800.** According to various embodiments, the machine may be connected (e.g., networked **820**) to other machines in a LAN, an intranet, an extranet, and/or the Internet. The machine may operate in the capacity of a server or a client machine in a client-server network environment, or as a peer machine in a peer-to-peer (or distributed) network environment.

The machine and devices described herein may be a personal computer (PC), a tablet PC, a set-top box (STB), a Personal Digital Assistant (PDA), a cellular telephone, a web appliance, a server, a network router, a switch or bridge, or any machine capable of executing a set of instructions (sequential or otherwise) that specify actions to be taken by that machine. Further, while a single machine is illustrated, the term "machine" includes any collection of machines that individually or jointly execute a set (or multiple sets) of instructions to perform any one or more of the methodologies discussed herein.

The example computer system **800** includes a processing device **802,** a main memory **804** (e.g., read-only memory (ROM), flash memory, dynamic random access memory (DRAM) such as synchronous DRAM (SDRAM) or rambus DRAM (RDRAM), etc.), a static memory **806** (e.g., flash memory, static random access memory (SRAM), etc.), and a data storage device **818,** which communicate with each other via a bus **830.**

Processing device **802** represents one or more general-purpose processing devices such as a microprocessor, a central processing unit, or the like. More particularly, the processing device may be a complex instruction set computing (CISC) microprocessor, reduced instruction set computing (RISC) microprocessor, very long instruction word (VLIW) microprocessor, or processor implementing other instruction sets, or processors implementing a combination of instruction sets. Processing device **802** may also be one or more specialpurpose processing devices such as an application specific integrated circuit (ASIC), a field programmable gate array (FPGA), a digital signal processor (DSP), network processor, a graphical processing unit (GPU), or the like. The processing device **802** is configured to execute instructions **822** for performing the operations and steps discussed herein.

The computing system **800** may further include a network interface device **808.** The computing system **800** also may optionally include a video display unit **810** (e.g., a liquid crystal display (LCD), Light Emitting Diode (LED) monitor, or a cathode ray tube (CRT)), an alphanumeric input device **812** (e.g., a keyboard), a cursor control device **814** (e.g., a mouse), and a signal generation device **816** (e.g., a speaker).

The data storage device **818** may include a machine-readable storage medium **828** (also known as a computer-readable medium) on which is stored one or more sets of instructions **822** or software embodying any one or more of the methodologies or functions described herein. The instructions **822** may also reside, completely or at least partially, within the main memory **804** and/or within the processing device **802** during execution thereof by the computer system **800,** the main memory **804** and the processing device **802** also constituting machine-readable storage media.

In one implementation, the instructions **822** include instructions for a RMM agent module **824,** and/or a software library containing methods that can be called by the RMM agent module **824.** The instructions in the RMM agent module **824** and/or the software library may be used to implement the methods as described above in relation to FIGS. 1-7. While the machine-readable storage medium **828** is shown in an example implementation to be a single medium, the term "machine-readable storage medium" includes a single medium or multiple media (e.g., a centralized or distributed database, and/or associated caches and servers) that store the one or more sets of instructions. The term "machine-readable storage medium" also includes any medium that is capable of storing or encoding a set of instructions for execution by the machine and that cause the machine to perform any one or more of the methodologies of the present disclosure. The term "machine-readable storage medium" accordingly includes, but is not limited to, solid-state memories, optical media, and magnetic media.

In addition to the methods and systems for ransomware detection and isolation described above, described below are two remediation methods for detecting a ransomware process itself, after the RD module detects a RWA, with the purpose of killing it, so the "damage" to an "attacked" local device can be minimized.

The first remediation method includes a ransomware process identification method implemented in the RW-detection module, i.e. RD module, and the second remediation method includes a ransomware process identification method implemented in the RMM agent module. The two remediation methods described can complement each other, where the RD module immediately kills an identified ransomware process by the first method, and subsequently, the second method performed by the RMM agent performs further processing to identify a ransomware processes not identified by the RD module, confirm the identified ransomware process from the first method and/or identify another ransomware process.

First Remediation Method (RD Module determines process to kill)

### General Operation:

After a positive ransomware detection, find all processes that were started before the first encrypted file, but less than n minutes before time of detection (**n** : 2-5 minutes), and that has not "been seen before".

Next, among these processes, find the process with the highest average accumulated kernel-CPU time, a high number of handles, still running, and not on the exclusion list.

### Definitions:

**ListA:** The list of all process names/Ids that has been observed, since RWD started up.

**ListB:** The list of all process names/Ids that has been observed for the first time, in the last n minutes (not including the initial set of processes on startup).

**ListX:** exclusion list, static list of processes that is known to have high CPU-usage.

For example, the following processes are not to be considered ransomware processes:
(.."Trusted Installer","WmiApSrv","audiodg","wuauclt","unsecapp", MpSigSt ub"
,msdtc","ScriptedSandbox64","chrome","Taskmgr","UI0Detect","FXSSVC", "M RT"..).

**n:** max number of minutes that a process can remain in listB (2-5 minutes).
**X:** number of seconds between requesting the list of active processes (e.g., 10 sec) from the OS (refresh cycle).
**Fst:** first time seen, the time a process was "seen" by RWD for the first time.
(**Now** - **fst**) is the time since process was started, and this value will be a multiple of **x.**
**fet:** time of first encrypted file (as estimated by RWD).
**Q:** minimum handles used by process, to be considered as possible ransomware process (50)

### Detailed Description of First Remediation Method.

Step 1) The RD module continuously monitors the processes started on the local device by requesting a list of active processes every x seconds (e.g.,= 10secs), from the OS.

Step 2) The RD module maintains the following lists:
**ListA** representing the universe of known processes since the RMM agent/RD module program start.
**ListA** is initialized at startup of the RD module, with a list of all running processes at that time.

Step 3) Every **x** seconds, the list of current running processes is fetched again, and any process not previously in **ListA,** is put into **ListA** AND into a new list, **ListB,** with a current timestamp **fst** (time the process was first seen).

Concurrently, i.e., at the same time, 'old' processes are removed from **ListB** if they have been in the list more than n minutes, based on its timestamp fst.

Step 4) At the time a positive ransomware detection is made, the RD module can make an estimate of when the first encryption of a file occurred fet (first encryption time). Presumably, the ransomware process is considered to have been started before that time, presumably soon before, so the process name should be in **ListB.**

Step 5) Fetch the list of running processes a last time, and update **ListB** if there any new ones.

Step 6) For each process in **ListB,** refresh the process information from the OS, including handles in use, accumulated time spend in kernel mode, and whether or not the process is still running. (The time spent in kernel mode, indicates that a process is using low level access to hardware resources, such as the filesystem, and is therefore a potential candidate. Same can be said about the number of handles used by the process).

Step 7) From **ListB,** select the process with the highest average kernel CPU-time that is still running and is using a number of handles > **q** (e.g., 50) and was started before the first encrypted file was seen (**fet**) and is not in the exclusion list **ListX.**

The Average kernel CPU-time is computed by dividing the accumulated kernel time (value from OS) with the time since the process was first seen **fst** ( CPU-time/ (now-fst in milliseconds)). This favors a process closer to the start of the encryption if more processes have similar kernel CPU-times.

### Some edge cases:

Step 8) If **fet** is less than **x** seconds ago, set **fet** to now, to include all new processes. If (**now -fst**) is 0, because process was started less than **x** seconds ago, divide the kernel CPU-time with **x** instead (in milliseconds).

Step 9) After an RWA-detection, the RMM agent is notified about the detection as described earlier, and the name/process Id of a possible ransomware process.

According to this first remediation method, the RD module kills the ransomware process identified in Steps 1-9. According to the second remediation method described below, the RMM agent kills the ransomware process identified in Steps 1-9, if any, and in addition tries to find and kill a process that has high fileactivity over a certain time-span.

Provided below is a code snippet, according to an exemplary embodiment of this disclosure, for a method for detecting and identifying a ransomware process to kill as described herein according to the First Remediation Method (RD module determines process to kill).

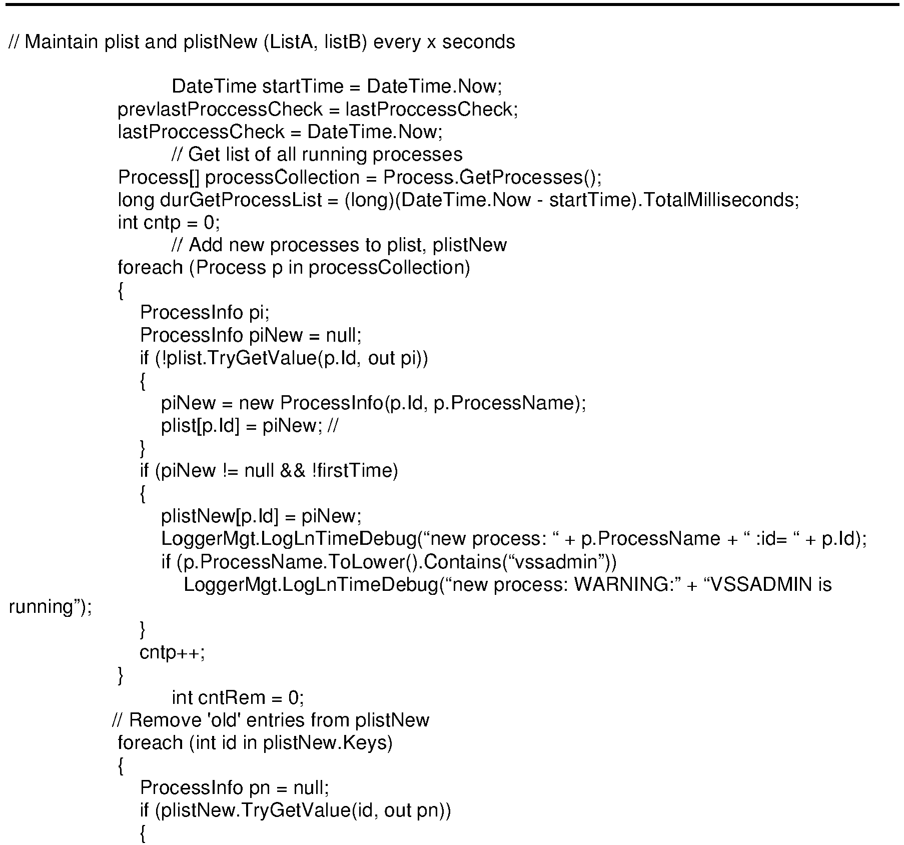

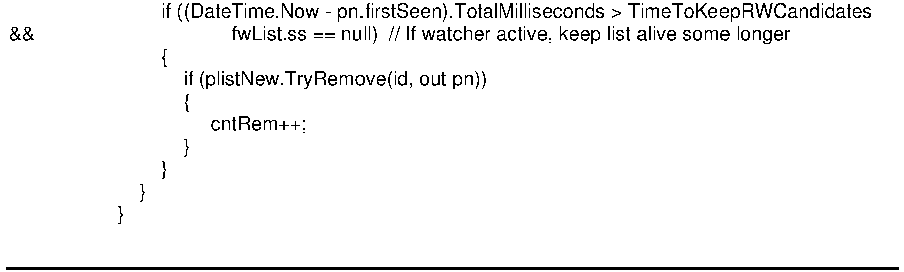

### Second Remediation Method (RMM agent determines process to kill)

### General Operation:

The RMM agent makes use of the WINDOWS Performance Counter API to sample the I/O activity of every process over a 1 second period.

Detailed Description of the Second Remediation Method.
Step 1) A ransomware detection event is received from the RwDetect library
Step 2) Kill the process identified by the RwDetect library.
Step 3) Build a list of all Windows Performance Counter instance names (essentially all processes running on the computer). Well known processes are ignored.
Step 4) Create a Windows Performance Counter of "Process","IO Write Bytes/sec" for each instance.
Step 5) Using the counter's created in (4) take a snapshot of the I/O activity for every instance.
Step 6) One second later take a further snapshot.
Step 7) Sort the processes in descending order of I/O activity.
Step 8) Return the top 3 most I/O intensive processes to the code that kills processes.
Step 9) Kill the process with the most I/O activity.

Provided below is a code snippet, according to an exemplary embodiment of this disclosure, for a method for detecting and identifying a ransomware process to kill as described herein according to the Second Remediation Method (RMM agent determines process to kill).

| |
|---|
| ```
 let processlnstances (perfmoninstances: (unit -> Set<string>)) =
 let processGenerator: lobservable<Set<string>> =
  Observable.ofSeq (perfmoninstances ())
  \|> Observable.map (fun _ -> Set.difference (perfmoninstances ()) ignoredPerfmoninstances)
 processGenerator
 let getPerfmonValue f = try f () \|> Choice1Of2 with \|_ -> Choice2Of2 ()
 let createIO (perfmon: string -> (unit -> int) * Idisposable) (name:string)
 Observable.Create
  (fun (obs:lobserver<_>) ->
  let (f,d) = perfmon name
  match getPerfmonValue f with
   \| Choice1Of2 _ -> obs.OnNext f
   \| Choice2Of2 _ -> obs.OnCompleted ()
  d)
 \|> Observable.map
   (fun f ->
   Observable.interval (TimeSpan.FromSeconds 1.)
   \|> Observable.map (fun _ -> getPerfmonValue f))
 \|> Observable.flatmap id
 \|> Observable.take 1
 \|> Observable.map
   (function
   \|Choice1Of2 v -> name, v
   \|Choice2Of2 _ -> name, -1)
 let topThreeIOProcessInstances perfmoninstances perfmon : lobservable<list<string>> =
 processlnstances perfmonlnstances
 \|> Observable.take 1
 \|> Observable.map (List.ofSeq >> List.map (createlO perfmon))
 \|> Observable.flatmap (Seq.ofList >> Observable.ofSeq)
 \|> Observable.flatmap id
 \|> Observable.fold (fun acc t -> f::acc) []
 \|> Observable.map (List.sortBy (snd >> (*)-1) >> Seq.truncate 3 >> List.ofSeq >> List.map fst)
``` |

Using the two different ransomware process identification methods described above will increase the probability of finding the correct process to be killed by the RMM agent. The first method has the advantage of being able to kill the identified ransomware process immediately after detection. The second method has the advantage of providing additional processing to identify a ransomware process not identified by the first method if the first method fails. However, the second method takes an additional short time-period to find a candidate process. It is clear that potentially killing 2 processes could result in killing a benign process, but this is an acceptable risk in the given circumstance.

Some portions of the detailed description herein are presented in terms of algorithms and symbolic representations of operations on data bits performed by conventional computer components, including a central processing unit (CPU), memory storage devices for the CPU, and connected display devices. These algorithmic descriptions and representations are the means used by those skilled in the data processing arts to most effectively convey the substance of their work to others skilled in the art. An algorithm is generally perceived as a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be understood, however, that all of these and similar terms are to be associated with the appropriate physical quantities and are merely convenient labels applied to these quantities. Unless specifically stated otherwise, as apparent from the discussion herein, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The exemplary embodiment also relates to an apparatus for performing the operations discussed herein. This apparatus may be specially constructed for the required purposes, or it may comprise a general-purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions, and each coupled to a computer system bus.

The algorithms and displays presented herein are not inherently related to any particular computer or other apparatus. Various general-purpose systems may be used with programs in accordance with the teachings herein, or it may prove convenient to construct more specialized apparatus to perform the methods described herein. The structure for a variety of these systems is apparent from the description above. In addition, the exemplary embodiment is not described with reference to any particular programming language. It will be appreciated that a variety of programming languages may be used to implement the teachings of the exemplary embodiment as described herein.

A machine-readable medium includes any mechanism for storing or transmitting information in a form readable by a machine (e.g., a computer). For instance, a machine-readable medium includes read only memory ("ROM"); random access memory ("RAM"); magnetic disk storage media; optical storage media; flash memory devices; and electrical, optical, acoustical or other form of propagated signals (e.g., carrier waves, infrared signals, digital signals, etc.), just to mention a few examples.

The methods illustrated throughout the specification, may be implemented in a computer program product that may be executed on a computer. The computer program product may comprise a non-transitory computer-readable recording medium on which a control program is recorded, such as a disk, hard drive, or the like. Common forms of non-transitory computer-readable media include, for example, floppy disks, flexible disks, hard disks, magnetic tape, or any other magnetic storage medium, CD-ROM, DVD, or any other optical medium, a RAM, a PROM, an EPROM, a FLASH-EPROM, or other memory chip or cartridge, or any other tangible medium from which a computer can read and use.

Alternatively, the method may be implemented in transitory media, such as a transmittable carrier wave in which the control program is embodied as a data signal using transmission media, such as acoustic or light waves, such as those generated during radio wave and infrared data communications, and the like.

It will be appreciated that variants of the above-disclosed and other features and functions, or alternatives thereof, may be combined into many other different systems or applications. Various presently unforeseen or unanticipated alternatives, modifications, variations or improvements therein may be subsequently made by those skilled in the art which are also intended to be encompassed by the following claims.

The exemplary embodiment has been described with reference to the preferred embodiments. Obviously, modifications and alterations will occur to others upon reading and understanding the preceding detailed description. It is intended that the exemplary embodiment be construed as including all such modifications and alterations insofar as they come within the scope of the appended claims or the equivalents thereof

## Claims

1. A RMM, Remote Monitoring and Management, system operatively associated with monitoring and managing a plurality of devices, including ransomware detection, the RMM system comprising:
a RMM agent module locally installed on each device and operatively communicating with an OS, operating system, installed on each device;
a cloud-based RMM platform hosted by a cloud-based infrastructure service and operatively communicating with each device RMM agent module, the cloud-based RMM Platform configured to monitor and manage each of the plurality of devices; and
a RD, Ransomware Detection, module locally installed on each device and operatively communicating with each respective device RMM agent module, the RD module configured to perform a method of detecting a ransomware-encryption in a plurality of files received by the device, the method including:
a) receiving from the cloud-based RMM platform ransomware monitor configuration data, the ransomware monitor configuration data including one or more watch-items including a list of one or more files, drives, and volumes to monitor for ransomware detection;
b) initiating a filewatcher and filewatcher handler to monitor and receive callbacks for create, delete, update, and rename file-events associated with the watch-items, the filewatcher adding each create, delete, update and rename file-event to a metadata watch-item file-event queue, the metadata watch-item file-event queue including raw watch-item file-event data associated with each create, delete, update, and rename file-event associated with the watch-items received from the cloud-based RMM platform, the raw-data including one or more of fileobjects and parent folders identified in the watch-item file-event;
c) a scheduler processing the metadata watch-item file-event queue according to a preset time-based schedule provided by the cloud-based RMM platform, the scheduler processing any watch-item file-event data included in the metadata watch-item file-event queue to determine a RW-alert state of the RD module, the scheduler operatively associated with an entropy-analysis-based ransomware detection process to detect potential ransomware-encryption of one or more of the watch-items listed in the watch-item file-event queue and generate the RW-alert state which is representative of a positive or negative detection of ransomware-encryption of one or more of the watch-items listed in the watch-item file-event queue; and
d) d) receiving, at the device, a command from the cloud-based RMM platform in response to the generated RW-alert state and the device running an isolation script that maintains communication of the device with the cloud-based RMM platform and disables all communications of the device with other internal and external network locations.

2. The RMM system operatively associated with monitoring and managing a plurality of devices according to claim 1, wherein:
the plurality of devices include one or more of a PC, Personal Computer, desktop computer, tablet PC, a set-top box, STB, a Personal Digital Assistant,PDA, a cellular telephone, a web appliance, a server, a network router, a switch or bridge, or any machine capable of executing a set of instructions - sequential or otherwise - that specify actions to be taken by that machine;
the OS is one of Windows, macOS, UNIX, and Linux or;
the RD module is implemented as a dll, dynamic link library, call function.

3. The RMM system operatively associated with monitoring and managing a plurality of devices according to claim 1, wherein the preset time-based schedule includes the scheduler generating timer events at a time interval of *t,* and *t* equals 1-20 seconds.

4. The RMM system operatively associated with monitoring and managing a plurality of devices according to claim 1,
step a) further comprising receiving from the cloud-based RMM platform ransomware monitor configuration data including an exclusion list of one or more files, drives, and volumes to exclude from monitoring for ransomware detection; and
step b) further comprising the filewatcher handler ignoring each create, delete, update and rename file-event included in the exclusion list.

5. The RMM system operatively associated with monitoring and managing a plurality of devices according to claim 1, step b) further comprising collapsing the raw watch-item file-event data; or
step c) further comprising:
the scheduler generating timer events according to the preset time-based schedule; and
at each timer event, the scheduler determining if the metadata watch-item file-event queue includes any watch-item file-event data,
if the metadata watch-item file-event queue does not include any watch-item file-event data, the scheduler terminates until the next timer event is generated, and
if the metadata watch-item file-event queue includes any watch-item file-event data, the scheduler extracts the watch-item file-event data, clears the metadata watch-item file-event queue, and processes the extracted watch-item file-event data to determine a RD-module state, the RD-module state including one of abort, continue and RW-alert, the abort state indicating a negative detection of ransomware-encryption of one or more of the watch-items listed in the watch-item file-event queue, the continue state indicating an inconclusive determination of ransomware-encryption of one or more of the watch-items listed in the watch-item file-event queue, and the RW-alert state indicating a detection of ransomware-encryption of one or more of the watch-items listed in the watch-item file-event queue.

6. The RMM system operatively associated with monitoring and managing a plurality of devices according to claim 1, wherein an abort state determination clears the RD-module state, a continue state carries over a previously determined RD-module state and the RW-alert state generates a notification to the cloud-based RMM platform, the notification including information about one or more suspected ransomware-encryption files.

7. The RMM system operatively associated with monitoring and managing a plurality of devices according to claim 1, step c) further comprising:
if the metadata watch-item file-event queue includes any watch-item file-event data, the scheduler extracts the watch-item file-event data and performs one or more of the following:
collapsing file-events associated with the watch-item file-event data into one or more other create, delete, update, and rename file file-events;
analyzing the watch-item file-event data to determine if the associated file events are consistent with one or more predetermined file update patterns representative of a potential ransomware-encryption; and
analyzing the watch-item file-event data to determine if the associated file events include one or more of an encryption of a minimum number of files, an encryption of a minimum percentage of files, a low frequency encryption of the files, and a high frequency encryption of the files.

8. A Ransomware Detection, RD, and Isolation module operatively associated with a cloud-based RMM, Remote Monitoring and Management, platform hosted by a cloud-based infrastructure service and configured to monitor and manage a plurality of devices, the RD and Isolation module comprising:
a dynamic link library file and API, Application Programming Interface, configured to perform a method of detecting a ransomware-encryption in a plurality of files received by the device, the method including:
a) the RD module receiving from the cloud-based RMM platform ransomware monitor configuration data, the ransomware monitor configuration data including one or more watch-items including a list of one or more files, drives, and volumes to monitor for ransomware detection;
b) the RD module initiating a filewatcher and filewatcher handler to monitor and receive callbacks for create, delete, update, and rename file-events associated with the watch-items, the filewatcher adding each create, delete, update and rename file-event to a metadata watch-item file-event queue, the metadata watch-item file-event queue including raw watch-item file-event data associated with each create, delete, update, and rename file-event associated with the watch-items received from the cloud-based RMM platform, the raw-data including one or more of fileobjects and parent folders identified in the watch-item file-event;
c) a RD module scheduler processing the metadata watch-item file-event queue according to a preset time-based schedule provided by the cloud-based RMM platform, the scheduler processing any watch-item file-event data included in the metadata watch-item file-event queue to determine a RW-alert state of the RD module, the scheduler operatively associated with an entropy-analysis-based ransomware detection process to detect potential ransomware-encryption of one or more of the watch-items listed in the watch-item file-event queue and generate the RW-alert state which is representative of a positive or negative detection of ransomware-encryption of one or more of the watch-items listed in the watch-item file-event queue;
d) in response to a positive RW-alert state detected on a ransomware affected device, the cloud-based RMM platform transmitting isolation script to the ransomware affected device; and
e) the ransomware affected device running the isolation script, the isolation script maintaining the device communication with the cloud-based RMM platform and disabling the ransomware affected device communication to all other internal and external network locations, the isolation script including:
e1) changing the ransomware affected device network information pertinent to the ransomware affected device network connection to the cloud-based RMM platform from a temporary DHCP, Dynamic Host Configuration Protocol, IP address assignment to a static IP address assignment, the network information including one or more of an internal IP, Internet Protocol, address of one or more active network adapters, inactive network adapters, a subnet mask of the one or more network adapters, a default gateway assignment of the one or more network adapters;
e2) nullifying local network and external network information on the ransomware affected device rendering the ransomware affected device unable to access any internal and external network, the nullified local and external network information including one or more of DNS, Domain Name System, server assignments for associated network adapters, default gateways of the associated network adapters, routing table of the ransomware affected device, routing information base of the ransomware affected device, ARP, Address Resolution Protocol, cache and NetBIOS cache; and
e3) re-adding to the ransomware affected device routing table the pertinent network information changed to an unchanging DHCP configuration in step e1) directly linking the default gateway IP stored in step e1) to reestablish a network connection from the ransomware affected device to the cloud-based RMM platform, the re-added network information including one or more of IP addresses for a partner RMM geographical platform, DNS servers, and the ransomware affected devices' HOSTS file; and
f) the ransomware affected device communicating to the cloud-based RMM platform over the RMM platform network connection isolation status information of the ransomware affected device.

9. The Ransomware Detection and Isolation module operatively associated with a cloud-based RMM platform according to claim 8, wherein the method further comprises:
step e) adding each IP address from the routing list to a device local routing table with a link directly to an IP address of the device default gateway setting with a subnet mask of a fixed value, thereby ensuring a direct link between the cloud-based RMM platform servers and the gateway while removing the default gateway assignment which nullifies all connectivity between the device and any other network internal and external services.

10. The Ransomware Detection and Isolation module operatively associated with a cloud-based RMM platform according to claim 8,
wherein:
the device is running a Windows OS, operating system, and the isolation script includes:
using an OS registry to disable APIPA, Automatic Private IP Addressing, service to force the device to use the script provided information;
disabling and stopping the OS LanManWorkstation service to disable the device from accessing mapped network drives;
using OS NetSH and NBTStat tools, clearing the ARP and NetBIOS caches from the device; and
using NSPBind tool to disable IPv6 connectivity; or
wherein the isolation script includes disabling IPv6 connectivity on the device and maintaining IPv4 connectivity; or
wherein the isolation script includes storing configuration associated with one or more of the device's active and inactive internet adapters in the OS registry to reestablish normal connectivity at a later time.

11. The Ransomware Detection and Isolation module operatively associated with a cloud-based RMM platform according to claim 8, wherein:
the plurality of devices include one or more of a PC, Personal Computer, desktop computer, tablet PC, a set-top box, STB, a Personal Digital Assistant, PDA, a cellular telephone, a web appliance, a server, a network router, a switch or bridge, or any machine capable of executing a set of instructions sequential or otherwise - that specify actions to be taken by that machine; or
wherein the preset time-based schedule includes the scheduler generating timer events at a time interval of *t,* and *t* equals 1-20 seconds; or
wherein the RD module is implemented as a dll, dynamic link library, call function.

12. The Ransomware Detection Isolation module operatively associated with a cloud-based RMM platform according to claim 8,
step a) further comprising receiving from the cloud-based RMM platform ransomware monitor configuration data including an exclusion list of one or more files, drives, and volumes to exclude from monitoring for ransomware detection; and
step b) further comprising the filewatcher handler ignoring each create, delete, update, and rename file-event included in the exclusion list.

13. The Ransomware Detection and Isolation module operatively associated with a cloud-based RMM platform according to claim 8,
the scheduler generating timer events according to the preset time-based schedule; and
at each timer event, the scheduler determining if the metadata watch-item file-event queue includes any watch-item file-event data,
if the metadata watch-item file-event queue does not include any watch-item file-event data, the scheduler terminates until the next timer event is generated, and
if the metadata watch-item file-event queue includes any watch-item file-event data, the scheduler extracts the watch-item file-event data, clears the metadata watch-item file-event queue, and processes the extracted watch-item file-event data to determine a RD-module state, the RD-module state including one of abort, continue and RW-alert, the abort state indicating a negative detection of ransomware-encryption of one or more of the watch-items listed in the watch-item file-event queue, the continue state indicating an inconclusive determination of ransomware-encryption of one or more of the watch-items listed in the watch-item file-event queue, and the RW-alert state indicating a detection of ransomware-encryption of one or more of the watch-items listed in the watch-item file-event queue.

14. The RMM system operatively associated with monitoring and managing a plurality of devices according to claim 1, further comprising:
e) if a RW-alert state is positive, the RD module performing a first remediation method to identify and kill a ransomware process associated with the RW-alert, the first remediation method including:
e1) determining all running processes that were started prior to the detection time of a first encrypted file, and started less than a predetermined time before the detection time;
e2) of the determined running processes in step e1), determine the currently running process, not included in an exclusion process list, with a highest average accumulated kernel-CPU time and associated with a number of OS handles above a predetermined threshold; and
e3) if step e2) and e3) result in an identification of a ransomware process, killing the ransomware process.

15. The RMM system operatively associated with monitoring and managing a plurality of devices according to claim 14, wherein, if a RW-alert state is positive, the RMM agent module performs a second remediation method to identify and kill a ransomware process associated with the RW-alert, the second remediation method including:
f1) determining all running processes on the local device which are not included in an exclusion process list;
f2) of the determined running processes in step f1), create a process performance counter for each determined running process, the process performance counters tracking I/O, Input/Output, write bytes per second for each process;
f3) identifying one or more processes in step f2) with the highest relative counter values, indicating these processes include the most I/O intensive processes and are potential ransomware processes; and
f4) killing one or more of the processes identified in step f3).

## Patentansprüche

1. RMM(Fernüberwachungs- und Verwaltungs)-System, das operativ mit einem Überwachen und einem Verwalten einer Vielzahl von Vorrichtungen, einschließlich Ransomware-Detektion, verknüpft ist, wobei das RMM-System Folgendes umfasst:
ein RMM-Agentenmodul, das auf jeder Vorrichtung lokal installiert ist und operativ mit einem auf jeder Vorrichtung installierten OS, Betriebssystem, kommuniziert;
eine cloudbasierte RMM-Plattform, die durch einen cloudbasierten Infrastrukturdienst gehostet ist und operativ mit jedem Vorrichtungs-RMM-Agentenmodul kommuniziert, wobei die cloudbasierte RMM-Plattform konfiguriert ist, jede der Vielzahl von Vorrichtungen zu überwachen und zu verwalten; und
ein RD(Ransomware-Detektions)-Modul, das auf jeder Vorrichtung lokal installiert ist und operativ mit jedem jeweiligen Vorrichtungs-RMM-Agentenmodul kommuniziert, wobei das RD-Modul konfiguriert ist, ein Verfahren zum Detektieren einer Ransomware-Verschlüsselung in einer Vielzahl von durch die Vorrichtung empfangenen Dateien durchzuführen, wobei das Verfahren Folgendes einschließt:
a) Empfangen von Ransomware-Überwachungskonfigurationsdaten von der cloudbasierten RMM-Plattform, wobei die Ransomware-Überwachungskonfigurationsdaten ein oder mehrere Wächterelemente, einschließlich einer Liste von einer oder mehreren Dateien, Laufwerken und Datenträgern, einschließen, um auf Ransomware-Detektion zu überwachen;
b) Initiieren eines Dateiwächters und eines Dateiwächter-Handlers, um Rückrufe für Erstellungs-, Löschungs-, Aktualisierungs- und Umbenennungs-Dateiereignisse, die mit den Wächterelementen verknüpft sind, zu überwachen und zu empfangen, wobei der Dateiwächter jedes Erstellungs-, Löschungs-, Aktualisierungs- und Umbenennungs-Dateiereignis einer Metadaten-Wächterelement-Dateiereignis-Warteschlange hinzufügt, wobei die Metadaten-Wächterelement-Dateiereignis-Warteschlange Wächterelement-Dateiereignis-Rohdaten einschließt, die mit jedem mit den von der cloudbasierten RMM-Plattform empfangenen Wächterelementen verknüpften Erstellungs-, Löschungs-, Aktualisierungs- und Umbenennungs-Dateiereignis verknüpft sind, wobei die Rohdaten eines oder mehrere von Dateiobjekten und übergeordneten Ordnern einschließen, die in dem Wächterelement-Dateiereignis identifiziert sind;
c) Verarbeiten der Metadaten-Wächterelement-Däteiereighis-Wärtesehlähge gemäß einem durch die cloudbasierte RMM-Plattform bereitgestellten, voreingestellten, zeitbasierten Zeitplan durch einen Scheduler, wobei der Scheduler beliebige in der Metadaten-Wächterelement-Dateiereignis-Warteschlange eingeschlossene Wächterelement-Dateiereignisdaten verarbeitet, um einen RW-Warnungszustand des RD-Moduls zu bestimmen, wobei der Scheduler operativ mit einem auf Entropieanalyse basierenden Ransomware-Detektionsvorgang verknüpft ist, um eine mögliche Ransomware-Verschlüsselung eines oder mehrerer der in der Wächterelement-Dateiereignis-Warteschlange aufgelisteten Wächterelemente zu detektieren und den RW-Warnungszustand zu erzeugen, der für eine positive oder negative Detektion einer Ransomware-Verschlüsselung eines oder mehrerer der in der Wächterelement-Dateiereignis-Warteschlange aufgelisteten Wächterelemente repräsentativ ist; und
d) d)Empfangen eines Befehls von der cloudbasierten RMM-Plattform an der Vorrichtung als Reaktion auf den erzeugten RW-Warnungszustand und Ausführen eines Isolationsskripts durch die Vorrichtung, das eine Kommunikation der Vorrichtung mit der cloudbasierten RMM-Plattform aufrechterhält und jegliche Kommunikation der Vorrichtung mit anderen internen und externen Netzwerkstandorten deaktiviert.

2. RMM-System, das operativ mit einem Überwachen und einem Verwalten einer Vielzahl von Vorrichtungen verknüpft ist, nach Anspruch 1, wobei:
die Vielzahl von Vorrichtungen eines oder mehrere von einem PC, Personal-Computer, einem Desktop-Computer, einem Tablet-PC, einer Set-Top-Box, STB, einem Persönlichen Digitalen Assistenten, PDA, einem Mobiltelefon, einer Web-Appliance, einem Server, einem Netzwerk-Router, einem Switch oder einer Brücke oder einer beliebigen Maschine einschließt, die in der Lage ist, einen Satz von Anweisungen - sequentiell oder anderweitig - auszuführen, die durch diese Maschine zu unternehmende Aktionen definieren;
das OS eines von Windows, macOS, UNIX oder Linux ist oder;
das RD-Modul als eine Aufruffunktion einer dll, dynamisch gelinkten Bibliothek, implementiert ist.

3. RMM-System, das operativ mit einem Überwachen und einem Verwalten einer Vielzahl von Vorrichtungen verknüpft ist, nach Anspruch 1, wobei der voreingestellte, zeitbasierte Zeitplan einschließt, dass der Scheduler Timer-Ereignisse in einem Zeitintervall von t erzeugt und t gleich 1-20 Sekunden ist.

4. RMM-System, das operativ mit einem Überwachen und einem Verwalten einer Vielzahl von Vorrichtungen verknüpft ist, nach Anspruch 1,
Schritt a) ferner umfassend ein Empfangen von Ransomware-Überwachungskonfigurationsdaten von der cloudbasierten RMM-Plattform, einschließlich einer Ausschlussliste von einer oder mehreren Dateien, Laufwerken und Datenträgern, die von einem Überwachen auf Ransomware-Detektion auszuschließen sind; und
Schritt b) ferner umfassend ein Ignorieren jedes in der Ausschlussliste eingeschlossenen Erstellungs-, Löschungs-, Aktualisierungs- und Umbenennungs-Dateiereignisses durch den Dateiwächter-Handler.

5. RMM-System, das operativ mit einem Überwachen und einem Verwalten einer Vielzahl von Vorrichtungen verknüpft ist, nach Anspruch 1, Schritt b) ferner umfassend ein Zusammenfassen der Wächterelement-Dateiereignis-Rohdaten; oder
Schritt c) ferner umfassend:
Erzeugen von Timer-Ereignissen gemäß dem voreingestellten, zeitbasierten Zeitplan durch den Scheduler; und
Bestimmen, ob die Metadaten-Wächterelement-Dateiereignis-Warteschlange beliebige Wächterelement-Dateiereignisdaten einschließt, durch den Scheduler bei jedem Timer-Ereignis,
falls die Metadaten-Wächterelement-Dateiereignis-Warteschlange keine Wächterelement-Dateiereignisdaten einschließt, wird der Scheduler beendet, bis das nächste Timer-Ereignis erzeugt wird, und
falls die Metadaten-Wächterelement-Dateiereignis-Warteschlange beliebige Wächterelement-Dateiereignisdaten einschließt, extrahiert der Scheduler die Wächterelement-Dateiereignisdaten, leert die Metadaten-Wächterelement-Dateiereignis-Warteschlange und verarbeitet die extrahierten Wächterelement-Dateiereignisdaten, um einen RD-Modulzustand zu bestimmen, wobei der RD-Modulzustand eines von einem Abbruch, einer Fortsetzung oder einer RW-Warnung einschließt, wobei der Abbruchzustand eine negative Detektion einer Ransomware-Verschlüsselung eines oder mehrerer der in der Wächterelement-Dateiereignis-Warteschlange aufgelisteten Wächterelemente anzeigt, der Fortsetzungszustand eine nicht schlüssige Bestimmung einer Ransomware-Verschlüsselung eines oder mehrerer der in der Wächterelement-Dateiereignis-Warteschlange aufgelisteten Wächterelemente anzeigt und der RW-Warnungszustand eine Detektion einer Ransomware-Verschlüsselung eines oder mehrerer der in der Wächterelement-Dateiereignis-Warteschlange aufgelisteten Wächterelemente anzeigt.

6. RMM-System, das operativ mit einem Überwachen und einem Verwalten einer Vielzahl von Vorrichtungen verknüpft ist, nach Anspruch 1, wobei eine Abbruchzustandsbestimmung den RD-Modulzustand leert, ein Fortsetzungszustand einen zuvor bestimmten RD-Modulzustand überträgt und der RW-Warnungszustand eine Benachrichtigung an die cloudbasierte RMM-Plattform erzeugt, wobei die Benachrichtigung Informationen über eine oder mehrere verdächtige Ransomware-Verschlüsselungsdateien einschließt.

7. RMM-System, das operativ mit einem Überwachen und einem Verwalten einer Vielzahl von Vorrichtungen verknüpft ist, nach Anspruch 1, Schritt c) ferner umfassend:
falls die Metadaten-Wächterelement-Dateiereignis-Warteschlange beliebige Wächterelement-Dateiereignisdaten einschließt, extrahiert der Scheduler die Wächterelement-Dateiereignisdaten und führt eines oder mehrere der folgenden Schritte durch:
Zusammenfassen von mit den Wächterelement-Dateiereignisdaten verknüpften Dateiereignissen zu einem oder mehreren anderen Erstellungs-, Löschungs-, Aktualisierungs- und Umbenennungs-Dateiereignissen;
Analysieren der Wächterelement-Dateiereignisdaten, um zu bestimmen, ob die verknüpften Dateiereignisse mit einem oder mehreren vorbestimmten Dateiaktualisierungsmustern, die für eine mögliche Ransomware-Verschlüsselung repräsentativ sind, übereinstimmen; und
Analysieren der Wächterelement-Dateiereignisdaten, um zu bestimmen, ob die verknüpften Dateiereignisse eines oder mehrere von einer Verschlüsselung einer Mindestanzahl von Dateien, einer Verschlüsselung eines Mindestprozentsatzes von Dateien, einer niedrigfrequenten Verschlüsselung der Dateien und einer hochfrequenten Verschlüsselung der Dateien einschließen.

8. Ransomware-Detektions(RD)- und Isolierungsmodul, das operativ mit einer durch einen cloudbasierten Infrastrukturdienst gehosteten, cloudbasierten RMM(Fernüberwachungs- und Verwaltungs)-Plattform verknüpft ist und konfiguriert ist, eine Vielzahl von Vorrichtungen zu überwachen und zu verwalten, wobei das RD- und Isolierungsmodul Folgendes umfasst:
eine Datei einer dynamisch gelinkten Bibliothek und eine API, Anwendungsschnittstelle, die konfiguriert sind, ein Verfahren zum Detektieren einer Ransomware-Verschlüsselung in einer Vielzahl von durch die Vorrichtung empfangenen Dateien durchzuführen, wobei das Verfahren Folgendes einschließt:
a) Empfangen von Ransomware-Überwachungskonfigurationsdaten von der cloudbasierten RMM-Plattform durch das RD-Modul, wobei die Ransomware-Überwachungskonfigurationsdaten ein oder mehrere Wächterelemente, einschließlich einer Liste von einer oder mehreren Dateien, Laufwerken und Datenträgern, einschließen, um auf Ransomware-Detektion zu überwachen;
b) Initiieren eines Dateiwächters und eines Dateiwächter-Handlers durch das RD-Modul, um Rückrufe für Erstellungs-, Löschungs-, Aktualisierungs- und Umbenennungs-Dateiereignisse, die mit den Wächterelementen verknüpft sind, zu überwachen und zu empfangen, wobei der Dateiwächter jedes Erstellungs-, Löschungs-, Aktualisierungs- und Umbenennungs-Dateiereignis einer Metadaten-Wächterelement-Dateiereignis-Warteschlange hinzufügt, wobei die Metadaten-Wächterelement-Dateiereignis-Warteschlange Wächterelement-Dateiereignis-Rohdaten einschließt, die mit jedem mit den von der cloudbasierten RMM-Plattform empfangenen Wächterelementen verknüpften Erstellungs-, Löschungs-, Aktualisierungs- und Umbenennungs-Dateiereignis verknüpft sind, wobei die Rohdaten eines oder mehrere von Dateiobjekten und übergeordneten Ordnern einschließen, die in dem Wächterelement-Dateiereignis identifiziert sind;
c) Verarbeiten der Metadaten-Wächterelement-Dateiereignis-Warteschlange gemäß einem durch die cloudbasierte RMM-Plattform bereitgestellten, voreingestellten, zeitbasierten Zeitplan durch einen RD-Modul-Scheduler, wobei der Scheduler beliebige in der Metadaten-Wächterelement-Dateiereignis-Warteschlange eingeschlossene Wächterelement-Dateiereignisdaten verarbeitet, um einen RW-Warnungszustand des RD-Moduls zu bestimmen, wobei der Scheduler operativ mit einem auf Entropieanalyse basierenden Ransomware-Detektionsvorgang verknüpft ist, um eine mögliche Ransomware-Verschlüsselung eines oder mehrerer der in der Wächterelement-Dateiereignis-Warteschlange aufgelisteten Wächterelemente zu detektieren und den RW-Warnungszustand zu erzeugen, der für eine positive oder negative Detektion einer Ransomware-Verschlüsselung eines oder mehrerer der in der Wächterelement-Dateiereignis-Warteschlange aufgelisteten Wächterelemente repräsentativ ist;
d) als Reaktion auf einen positiven RW-Warnungszustand, der auf einer von Ransomware betroffenen Vorrichtung detektiert wird, Übermitteln eines Isolationsskripts an die von Ransomware betroffene Vorrichtung durch die cloudbasierte RMM-Plattform; und
e) Laufenlassen des Isolationsskripts durch die von Ransomware betroffene Vorrichtung, wobei das Isolationsskript die Kommunikation der Vorrichtung mit der cloudbasierten RMM-Plattform aufrechterhält und die Kommunikation der von Ransomware betroffenen Vorrichtung zu allen anderen internen und externen Netzwerkstandorten deaktiviert, wobei das Isolationsskript Folgendes einschließt:
e1) Ändern der Netzwerkinformationen der von Ransomware betroffenen Vorrichtung, die für die Netzwerkverbindung der von Ransomware betroffenen Vorrichtung zu der cloudbasierten RMM-Plattform relevant sind, von einer temporären IP-Adresszuweisung nach einem DHCP, Protokoll zur dynamischen Konfiguration von Hosts, zu einer statischen IP-Adresszuweisung, wobei die Netzwerkinformationen eines oder mehrere von einer internen IP(Internetprotokoll)-Adresse, einer Adresse eines oder mehrerer aktiver Netzwerkadapter, inaktiven Netzwerkadaptern, einer Subnetzmaske des einen oder der mehreren Netzwerkadapter, einer Standard-Gateway-Zuweisung des einen oder der mehreren Netzwerkadapter einschließen;
e2) Ungültigmachen von lokalen Netzwerk- und externen Netzwerkinformationen auf der von Ransomware betroffenen Vorrichtung, wodurch die von Ransomware betroffene Vorrichtung nicht mehr auf ein internes oder externes Netzwerk zugreifen kann, wobei die ungültig gemachten lokalen und externen Netzwerkinformationen eines oder mehrere von Folgenden einschließen: DNS(Domain Name System)- Serverzuweisungen für verknüpfte Netzwerkadapter, Standard-Gateways der verknüpften Netzwerkadapter, Routingtabelle der von Ransomware betroffenen Vorrichtung, Routing-Informationsbasis der von Ransomware betroffenen Vorrichtung, ARP(Address Resolution Protocol)-Cache und NetBIOS-Cache; und
e3) erneutes Hinzufügen der in Schritt e1) auf eine unveränderliche DHCP-Konfiguration geänderten relevanten Netzwerkinformationen zu der Routing-Tabelle der von Ransomware betroffenen Vorrichtung, wobei die in Schritt e1) gespeicherte IP des Standard-Gateways direkt verlinkt wird, um eine Netzwerkverbindung von der von Ransomware betroffenen Vorrichtung zu der cloudbasierten RMM-Plattform wiederherzustellen, wobei die erneut hinzugefügten Netzwerkinformationen eine oder mehrere von IP-Adressen für eine geografische Partner-RMM-Plattform, DNS-Servern und der HOSTS-Datei der von Ransomware betroffenen Vorrichtung einschließen; und
f) Kommunizieren von Isolierungsstatusinformationen der von Ransomware betroffenen Vorrichtung an die cloudbasierte RMM-Plattform über die Netzwerkverbindung der RMM-Plattform durch die von Ransomware betroffene Vorrichtung.

9. Ransomware-Detektions- und Isolierungsmodul, das operativ mit einer cloudbasierten RMM-Plattform verknüpft ist, nach Anspruch 8, wobei das Verfahren ferner Folgendes umfasst:
Schritt e) Hinzufügen jeder IP-Adresse aus der Routing-Liste zu einer lokalen Routing-Tabelle der Vorrichtung mit einem direkten Link zu einer IP-Adresse der Standard-Gateway-Einstellung der Vorrichtung mit einer Subnetzmaske eines fixen Werts, wodurch ein direkter Link zwischen den cloudbasierten RMM-Plattform-Servern und dem Gateway sichergestellt wird, während die Standard-Gateway-Zuweisung entfernt wird, was jegliche Konnektivität zwischen der Vorrichtung und beliebigen anderen netzwerkinternen und -externen Diensten ungültig macht.

10. Ransomware-Detektions- und Isolierungsmodul, das operativ mit einer cloudbasierten RMM-Plattform verknüpft ist, nach Anspruch 8,
wobei:
die Vorrichtung ein Windows-OS, Betriebssystem, laufen lässt und das Isolationsskript Folgendes einschließt:
Verwenden einer OS-Registrierung, um einen Dienst zur APIPA, automatischen Zuweisung privater IP-Adressen, zu deaktivieren, um die Vorrichtung zu zwingen, die durch das Skript bereitgestellten Informationen zu verwenden;
Deaktivieren und Stoppen des OS-LanManWorkstation-Dienstes, um ein Zugreifen der Vorrichtung auf zugeordnete Netzwerklaufwerke zu deaktivieren;
Leeren der ARP- und NetBIOS-Caches von der Vorrichtung unter Verwendung eines NetSH- und eines NBTStat-Werkzeugs des OS; und
Verwenden eines NSPBind-Werkzeugs, um eine IPv6-Konnektivität zu deaktivieren; oder
wobei das Isolationsskript ein Deaktivieren der IPv6-Konnektivität auf der Vorrichtung und ein Aufrechterhalten einer IPv4-Konnektivität einschließt; oder
wobei das Isolationsskript ein Speichern einer Konfiguration, die mit einem oder mehreren der aktiven und inaktiven Internetadapter der Vorrichtung verknüpft ist, in der OS-Registrierung einschließt, um zu einem späteren Zeitpunkt eine normale Konnektivität wiederherzustellen.

11. Ransomware-Detektions- und Isolierungsmodul, das operativ mit einer cloudbasierten RMM-Plattform verknüpft ist, nach Anspruch 8, wobei:
die Vielzahl von Vorrichtungen eines oder mehrere von einem PC, Personal-Computer, einem Desktop-Computer, einem Tablet-PC, einer Set-Top-Box, STB, einem Persönlichen Digitalen Assistenten, PDA, einem Mobiltelefon, einer Web-Appliance, einem Server, einem Netzwerk-Router, einem Switch oder einer Brücke oder einer beliebigen Maschine einschließt, die in der Lage ist, einen Satz von Anweisungen - sequentiell oder anderweitig - auszuführen, die durch diese Maschine zu unternehmende Aktionen definieren; oder
wobei der voreingestellte, zeitbasierte Zeitplan einschließt, dass der Scheduler Timer-Ereignisse in einem Zeitintervall von t erzeugt und t gleich 1-20 Sekunden ist; oder
wobei das RD-Modul als eine Aufruffunktion einer dll, dynamisch gelinkten Bibliothek, implementiert ist.

12. Ransomware-Detektions-Isolierungsmodul, das operativ mit einer cloudbasierten RMM-Plattform verknüpft ist, nach Anspruch 8,
Schritt a) ferner umfassend ein Empfangen von Ransomware-Überwachungskonfigurationsdaten von der cloudbasierten RMM-Plattform, einschließlich einer Ausschlussliste von einer oder mehreren Dateien, Laufwerken und Datenträgern, die von einem Überwachen auf Ransomware-Detektion auszuschließen sind; und
Schritt b) ferner umfassend ein Ignorieren jedes in der Ausschlussliste eingeschlossenen Erstellungs-, Löschungs-, Aktualisierungs- und Umbenennungs-Dateiereignisses durch den Dateiwächter-Handler.

13. Ransomware-Detektions- und Isolierungsmodul, das operativ mit einer cloudbasierten RMM-Plattform verknüpft ist, nach Anspruch 8,
Erzeugen von Timer-Ereignissen gemäß dem voreingestellten, zeitbasierten Zeitplan durch den Scheduler; und
Bestimmen, ob die Metadaten-Wächterelement-Dateiereignis-Warteschlange beliebige Wächterelement-Dateiereignisdaten einschließt, durch den Scheduler bei jedem Timer-Ereignis,
falls die Metadaten-Wächterelement-Dateiereignis-Warteschlange keine Wächterelement-Dateiereignisdaten einschließt, wird der Scheduler beendet, bis das nächste Timer-Ereignis erzeugt wird, und
falls die Metadaten-Wächterelement-Dateiereignis-Warteschlange beliebige Wächterelement-Dateiereignisdaten einschließt, extrahiert der Scheduler die Wächterelement-Dateiereignisdaten, leert die Metadaten-Wächterelement-Dateiereignis-Warteschlange und verarbeitet die extrahierten Wächterelement-Dateiereignisdaten, um einen RD-Modulzustand zu bestimmen, wobei der RD-Modulzustand eines von einem Abbruch, einer Fortsetzung oder einer RW-Warnung einschließt, wobei der Abbruchzustand eine negative Detektion einer Ransomware-Verschlüsselung eines oder mehrerer der in der Wächterelement-Dateiereignis-Warteschlange aufgelisteten Wächterelemente anzeigt, der Fortsetzungszustand eine nicht schlüssige Bestimmung einer Ransomware-Verschlüsselung eines oder mehrerer der in der Wächterelement-Dateiereignis-Warteschlange aufgelisteten Wächterelemente anzeigt und der RW-Warnungszustand eine Detektion einer Ransomware-Verschlüsselung eines oder mehrerer der in der Wächterelement-Dateiereignis-Warteschlange aufgelisteten Wächterelemente anzeigt.

14. RMM-System, das operativ mit einem Überwachen und einem Verwalten einer Vielzahl von Vorrichtungen verknüpft ist, nach Anspruch 1, ferner umfassend:
e) falls ein RW-Warnungszustand positiv ist, Durchführen eines ersten Sanierungsverfahrens durch das RD-Modul, um einen mit der RW-Warnung verknüpften Ransomware-Vorgang zu identifizieren und abzubrechen, wobei das erste Sanierungsverfahren Folgendes einschließt:
e1) Bestimmen aller laufenden Vorgänge, die vor dem Detektionszeitpunkt einer ersten verschlüsselten Datei gestartet wurden und weniger als einen vorbestimmten Zeitraum vor dem Detektionszeitpunkt gestartet wurden;
e2) Bestimmen des derzeit laufenden Vorgangs von den in Schritt e1) bestimmten laufenden Vorgängen, der nicht in einer Ausschlussvorgangsliste eingeschlossen ist, mit einem höchsten durchschnittlichen akkumulierten Kernel-CPU-Zeitraum und mit dem eine Anzahl von OS-Handles oberhalb eines vorbestimmten Schwellenwerts verknüpft ist; und
e3) falls die Schritte e2) und e3) in einer Identifizierung eines Ransomware-Vorgangs resultieren, Abbrechen des Ransomware-Vorgangs.

15. RMM-System, das operativ mit einem Überwachen und einem Verwalten einer Vielzahl von Vorrichtungen verknüpft ist, nach Anspruch 14, wobei das RMM-Agentenmodul, falls ein RW-Warnungszustand positiv ist, ein zweites Sanierungsverfahren durchführt, um einen mit der RW-Warnung verknüpften Ransomware-Vorgang zu identifizieren und abzubrechen, wobei das zweite Sanierungsverfahren Folgendes einschließt:
f1) Bestimmen aller laufenden Vorgänge auf der lokalen Vorrichtung, die nicht in einer Ausschlussvorgangsliste eingeschlossen sind;
f2) Erstellen eines Vorgangsleistungszählers für jeden bestimmten laufenden Vorgang von den in Schritt f1) bestimmten laufenden Vorgängen, wobei die Vorgangsleistungszähler für jeden Vorgang pro Sekunde geschriebene I/O(Eingabe-/Ausgabe)-Bytes nachverfolgen;
f3) Identifizieren eines oder mehrerer Vorgänge in Schritt f2) mit den höchsten relativen Zählerwerten, wodurch angezeigt wird, dass diese Vorgänge die I/O-intensivsten Vorgänge einschließen und mögliche Ransomware-Vorgänge sind; und
f4) Abbrechen eines oder mehrerer der in Schritt f3) identifizierten Vorgänge.

## Revendications

1. Système de surveillance et de gestion à distance, RMM, associé de manière fonctionnelle à la surveillance et la gestion d'une pluralité de dispositifs, comportant la détection de rançongiciels, le système de RMM comprenant :
un module agent de RMM installé localement sur chaque dispositif et communiquant de manière fonctionnelle avec un système d'exploitation, OS, installé sur chaque dispositif ;
une plateforme de RMM basée sur le cloud, hébergée par un service d'infrastructure cloud et communiquant de manière fonctionnelle avec chaque module agent de RMM de dispositif, la plateforme de RMM basée sur le cloud étant configurée pour surveiller et gérer chacun de la pluralité des dispositifs ; et
un module de détection de rançongiciels, RD, installé localement sur chaque dispositif et communiquant de manière fonctionnelle avec le module agent de RMM de chaque dispositif respectif, le module de RD étant configuré pour réaliser un procédé de détection d'un chiffrement par rançongiciel dans une pluralité de fichiers reçus par le dispositif, le procédé comportant :
a) la réception, depuis la plateforme de RMM basée sur le cloud, de données de configuration de surveillance de rançongiciels, les données de configuration de surveillance de rançongiciels comportant un ou plusieurs éléments de surveillance, qui comportent une liste d'un ou plusieurs fichiers, lecteurs et volumes à surveiller pour la détection de rançongiciels ;
b) le lancement d'un observateur de fichiers et d'un gestionnaire d'observateur de fichiers pour surveiller et recevoir des rappels pour les événements de création, de suppression, de mise à jour et de renommage de fichiers associés aux éléments surveillés, l'observateur de fichiers ajoutant chaque événement de création, de suppression, de mise à jour et de renommage de fichier à une file d'attente d'événements de fichiers d'éléments surveillés de métadonnées, la file d'attente d'événements de fichiers d'éléments surveillés de métadonnées comportant les données brutes d'événements de fichiers d'éléments surveillés associées à chaque événement de création, de suppression, de mise à jour et de renommage de fichier associé aux éléments surveillés reçus de la plateforme de RMM basée sur le cloud, les données brutes comportant l'un ou plusieurs des objets de fichiers et de dossiers parents identifiés dans l'événement de fichier d'élément surveillé ;
c) un planificateur traitant la file d'attente d'événements de fichiers d'éléments surveillés de métadonnées selon une planification temporelle prédéfinie fournie par la plateforme de RMM basée sur le cloud, le planificateur traitant toutes les données d'événements de fichiers d'éléments surveillés comprises dans la file d'attente d'événements de fichiers d'éléments surveillés de métadonnées afin de déterminer un état d'alerte RW du module de RD, le planificateur étant associé de manière fonctionnelle à un processus de détection de rançongiciels basé sur l'analyse entropique pour détecter un potentiel chiffrement par rançongiciel de l'un ou plusieurs des éléments surveillés répertoriés dans la file d'attente d'événements de fichiers d'éléments surveillés et générer l'état d'alerte RW qui représente une détection positive ou négative de chiffrement par rançongiciel de l'un ou plusieurs des éléments surveillés répertoriés dans la file d'attente d'événements de fichiers d'éléments surveillés ; et
d) d)la réception, au niveau du dispositif, d'une commande de la plateforme de RMM basée sur le cloud en réponse à l'état d'alerte RW généré et du dispositif exécutant un script d'isolement qui maintient la communication du dispositif avec la plateforme de RMM basée sur le cloud et désactive toutes les communications du dispositif avec d'autres emplacements de réseau internes et externes.

2. Système de RMM associé de manière fonctionnelle à la surveillance et à la gestion d'une pluralité de dispositifs selon la revendication 1, dans lequel :
la pluralité de dispositifs comporte l'un ou plusieurs des éléments suivants : ordinateur personnel, PC, ordinateur de bureau, tablette PC, un décodeur, STB, un assistant numérique personnel, PDA, un téléphone cellulaire, un dispositif Web, un serveur, un routeur de réseau, un commutateur ou un pont, ou toute machine capable d'exécuter un ensemble d'instructions, séquentielles ou autres, qui spécifient les actions que cette machine doit entreprendre ;
le système d'exploitation est l'un de Windows, macOS, UNIX et Linux, ou ;
le module de RD est mis en œuvre sous forme de fonction d'appel DLL, bibliothèque de liens dynamiques.

3. Système de RMM associé de manière fonctionnelle à la surveillance et à la gestion d'une pluralité de dispositifs selon la revendication 1, dans lequel la planification temporelle prédéfinie comporte le planificateur générant des événements de minuterie à un intervalle de temps t, et t est égal à 1-20 secondes.

4. Système de RMM associé de manière fonctionnelle à la surveillance et à la gestion d'une pluralité de dispositifs selon la revendication 1,
étape a) comprenant en outre la réception, depuis la plateforme de RMM basée sur le cloud, de données de configuration de surveillance de rançongiciels comportant une liste d'exclusion d'un ou plusieurs fichiers, lecteurs et volumes à exclure de la surveillance pour la détection de rançongiciels ; et
étape b) comprenant en outre le gestionnaire de surveillance de fichiers ignorant chaque événement de création, de suppression, de mise à jour et de renommage de fichier compris dans la liste d'exclusion.

5. Système de RMM associé de manière fonctionnelle à la surveillance et à la gestion d'une pluralité de dispositifs selon la revendication 1, étape b) comprenant en outre le regroupement des données brutes des fichiers d'événements d'éléments surveillés ; ou
étape c) comprenant en outre :
le planificateur générant des événements de minuterie selon la planification temporelle prédéfinie ; et
à chaque événement de minuterie, le fait de déterminer par le planificateur si la file d'attente d'événements de fichiers d'éléments surveillés de métadonnées comporte des données d'événements de fichiers d'éléments surveillés,
si la file d'attente d'événements de fichiers d'éléments surveillés de métadonnées ne comporte aucune donnée d'événement de fichier d'élément surveillé, le planificateur s'arrête jusqu'à la génération du prochain événement de minuterie, et
si la file d'attente d'événements de fichiers d'éléments surveillés de métadonnées comporte des données d'événements de fichiers d'éléments surveillés, le planificateur extrait les données d'événements de fichiers d'éléments surveillés, vide la file d'attente d'événements de fichiers d'éléments surveillés de métadonnées et traite les données d'événements de fichiers d'éléments surveillés extraites afin de déterminer un état du module de RD, l'état du module de RD comprenant l'un parmi : abandon, poursuite ou alerte RW, l'état abandon indiquant une détection négative de chiffrement par rançongiciel pour l'un ou plusieurs des éléments surveillés répertoriées dans la file d'attente d'événements de fichiers d'éléments surveillés, l'état poursuite indiquant une détermination non concluante de chiffrement par rançongiciel pour l'un ou plusieurs des éléments surveillés répertoriées dans la file d'attente d'événements de fichiers d'éléments surveillés, et l'état alerte RW indiquant une détection de chiffrement par rançongiciel pour l'un ou plusieurs des éléments surveillés répertoriées dans la file d'attente d'événements de fichiers d'éléments surveillés.

6. Système de RMM associé de manière fonctionnelle à la surveillance et à la gestion d'une pluralité de dispositifs selon la revendication 1, dans lequel une détermination d'état abandon efface l'état du module de RD, un état poursuite conserve un état de module de RD précédemment déterminé et l'état alerte RW génère une notification à la plateforme de RMM basée sur le cloud, la notification comprenant des informations sur un ou plusieurs fichiers de chiffrement par rançongiciel suspects.

7. Système de RMM associé de manière fonctionnelle à la surveillance et à la gestion d'une pluralité de dispositifs selon la revendication 1, étape c) comprenant en outre :
si la file d'attente d'événements de fichiers d'éléments surveillés de métadonnées comporte des données d'événements de fichiers d'éléments surveillés, le planificateur extrait les données d'événements de fichiers d'éléments surveillés et réalise l'une ou plusieurs des actions suivantes :
le regroupement des événements de fichier associés aux données d'événements de fichiers d'éléments surveillés en un ou plusieurs autres événements de fichier de création, de suppression, de mise à jour et de renommage de fichier ;
l'analyse des données d'événements de fichiers d'éléments surveillés afin de déterminer si les événements de fichiers associés sont cohérents avec un ou plusieurs modèles de mise à jour de fichiers prédéterminés, représentatifs d'un potentiel chiffrement par rançongiciel ; et
l'analyse des données d'événements de fichiers d'éléments surveillés pour déterminer si les événements de fichiers associés comportent l'un ou plusieurs des éléments suivants : un chiffrement d'un nombre minimum de fichiers, un chiffrement d'un pourcentage minimum de fichiers, un chiffrement à basse fréquence des fichiers et un chiffrement à haute fréquence des fichiers.

8. Module de détection de rançongiciels, RD, et d'isolement associé de manière fonctionnelle à une plateforme de surveillance et de gestion à distance, RMM, basée sur le cloud, hébergée par un service d'infrastructure cloud et configurée pour surveiller et gérer une pluralité de dispositifs, le module de RD et d'isolement comprenant :
un fichier de bibliothèque de liens dynamiques et une interface de programmation d'application, API, configurés pour réaliser un procédé de détection d'un chiffrement par rançongiciel dans une pluralité de fichiers reçus par le dispositif, le procédé comportant :
a) la réception par le module de RD, depuis la plateforme de RMM basée sur le cloud, de données de configuration de surveillance de rançongiciels, les données de configuration de surveillance de rançongicielss comprenant un ou plusieurs éléments de surveillance, qui comportent une liste d'un ou plusieurs fichiers, lecteurs et volumes à surveiller pour la détection de rançongiciels ;
b) le lancement, par le module de RD, d'un observateur de fichiers et d'un gestionnaire d'observateur de fichiers pour surveiller et recevoir les rappels pour les événements de création, de suppression, de mise à jour et de renommage de fichiers associés aux éléments surveillés, l'observateur de fichiers ajoutant chaque événement de création, de suppression, de mise à jour et de renommage de fichier à une file d'attente d'événements de fichiers d'éléments surveillés de métadonnées, la file d'attente d'événements de fichiers d'éléments surveillés de métadonnées comprenant les données brutes d'événements de fichiers d'éléments surveillés associées à chaque événement de création, de suppression, de mise à jour et de renommage de fichier associé aux éléments surveillés reçus de la plateforme de RMM basée sur le cloud, les données brutes comprenant l'un ou plusieurs d'objets de fichiers et de dossiers parents identifiés dans l'événement de fichier d'élément surveillé ;
c) un planificateur de module de RD traitant la file d'attente d'événements de fichiers d'éléments surveillés de métadonnées selon une planification temporelle prédéfinie fournie par la plateforme de RMM basée sur le cloud, le planificateur traitant toutes les données d'événements de fichiers d'éléments surveillés comprises dans la file d'attente d'événements de fichiers d'éléments surveillés de métadonnées afin de déterminer un état d'alerte RW du module de RD, le planificateur étant associé de manière fonctionnelle à un processus de détection de rançongiciels basé sur l'analyse entropique pour détecter le potentiel chiffrement par rançongiciel de l'un ou plusieurs des éléments surveillés répertoriés dans la file d'attente d'événements de fichiers d'éléments surveillés et générer l'état d'alerte RW qui représente une détection positive ou négative de chiffrement par rançongiciel de l'un ou plusieurs des éléments surveillés répertoriés dans la file d'attente d'événements de fichiers d'éléments surveillés ;
d) en réponse à un état d'alerte RW positif détecté sur un dispositif infecté par un rançongiciel, la transmission, par la plateforme de RMM basée sur le cloud, d'un script d'isolement au dispositif infecté ; et
e) l'exécution du script d'isolement par le dispositif infecté par le rançongiciel, le script d'isolement maintenant la communication du dispositif avec la plateforme de RMM basée sur le cloud et désactivant la communication du dispositif infecté par le rançongiciel avec tous les autres emplacements de réseau interne et externe, le script d'isolement comportant :
e1) la modification des informations de réseau du dispositif affecté par le rançongiciel relatives à la connexion du dispositif affecté par le rançongiciel à la plateforme de RMM basée sur le cloud, d'une attribution d'adresse IP de protocole de configuration dynamique des hôtes, DHCP, temporaire à une attribution d'adresse IP statique, les informations de réseau comprenant l'un ou plusieurs des éléments suivants : une adresse de protocole Internet, IP, interne, une ou plusieurs cartes réseau actives, des cartes réseau inactives, un masque de sous-réseau des une ou plusieurs cartes réseau, une attribution de passerelle par défaut des une ou plusieurs cartes réseau ;
e2) la neutralisation des informations de réseau local et de réseau externe sur le dispositif infecté par le rançongiciel, rendant ainsi le dispositif affecté par le rançongiciel incapable d'accéder à tout réseau interne et externe, les informations de réseau local et externe neutralisées comportant l'un ou plusieurs des éléments suivants : un système de nom de domaine, DNS, des attribution de serveurs pour les cartes réseau associées, des passerelles par défaut des cartes réseau associées, une table de routage du dispositif infecté par le rançongiciel, une base d'informations de routage du dispositif infecté par le rançongiciel, un protocole de résolution d'adresse, ARP, un cache et un cache NetBIOS ; et
e3) la réintégration, à la table de routage du dispositif infecté par le rançongiciel, des informations de réseau pertinentes modifiées vers une configuration DHCP fixe à l'étape e1), reliant directement l'adresse IP de la passerelle par défaut stockée à l'étape e1) pour rétablir une connexion réseau entre le dispositif infecté par le rançongiciel et la plateforme de RMM basée sur le cloud, les informations de réseau réintégrées comportant l'un ou plusieurs des éléments suivants : les adresses IP pour une plateforme de RMM géographique partenaire, des serveurs DNS et le fichier HOSTS du dispositif infecté par le rançongiciel ; et
f) la communication, par le dispositif infecté par le rançongiciel, à la plateforme de RMM basée sur le cloud, par le biais de la connexion réseau de la plateforme de RMM, d'informations d'état d'isolement du dispositif infecté par le rançongiciel.

9. Module de détection et d'isolement de rançongiciels associé de manière fonctionnelle à une plateforme de RMM basée sur le cloud selon la revendication 8, dans lequel le procédé comprend en outre :
étape e) l'ajout de chaque adresse IP de la liste de routage à une table de routage locale de dispositif avec un lien direct vers une adresse IP de la passerelle par défaut du dispositif avec un masque de sous-réseau de valeur fixe, assurant ainsi une liaison directe entre les serveurs de la plateforme de RMM basée sur le cloud et la passerelle tout en supprimant l'attribution de passerelle par défaut qui annule toute connectivité entre le dispositif et tout autre service réseau interne et externe.

10. Module de détection et d'isolement de rançongiciels associé de manière fonctionnelle à une plateforme de RMM basée sur le cloud selon la revendication 8,
dans lequel :
le dispositif exécute un système d'exploitation, OS, Windows, et le script d'isolement comporte :
l'utilisation d'un registre du système d'exploitation pour désactiver le service d'attribution automatique d'adresses IP privées, APIPA, afin de forcer le dispositif à utiliser les informations fournies par le script ;
la désaction et l'arrêt du service LanManWorkstation du système d'exploitation pour empêcher le dispositif d'accéder aux lecteurs réseau mappés ;
en utilisant les outils NetSH et NBTStat du système d'exploitation, l'effacement des caches ARP et NetBIOS du dispositif ; et
l'utilisation de l'outil NSPBind pour désactiver la connectivité IPv6 ; ou
dans lequel le script d'isolement comporte la désactivation de la connectivité IPv6 sur le dispositif et le maintien de la connectivité IPv4 ; ou
dans lequel le script d'isolement comporte le stockage de la configuration associée à l'une ou plusieurs des cartes réseau actives et inactives du dispositif dans le registre du système d'exploitation afin de rétablir une connectivité normale ultérieurement.

11. Module de détection et d'isolement de rançongiciels associé de manière fonctionnelle à une plateforme de RMM basée sur le cloud selon la revendication 8, dans lequel :
la pluralité de dispositifs comporte l'un ou plusieurs des éléments suivants : ordinateur personnel, PC, ordinateur de bureau, tablette PC, un décodeur, STB, un assistant numérique personnel, PDA, un téléphone cellulaire, un dispositif Web, un serveur, un routeur de réseau, un commutateur ou un pont, ou toute machine capable d'exécuter un ensemble d'instructions, séquentielles ou autres, qui spécifient les actions à entreprendre par cette machine ; ou
dans lequel la planification temporelle prédéfinie comporte le planificateur générant des événements de minuterie à un intervalle de temps t, et t est égal à 1-20 secondes ; ou
dans lequel le module de RD est mis en œuvre sous forme de fonction d'appel DLL, bibliothèque de liens dynamiques.

12. Module de détection et d'isolement de rançongiciels associé de manière fonctionnelle à une plateforme de RMM basée sur le cloud selon la revendication 8,
étape a) comprenant en outre la réception, depuis la plateforme de RMM basée sur le cloud, de données de configuration de surveillance de rançongiciels comportant une liste d'exclusion d'un ou plusieurs fichiers, lecteurs et volumes à exclure de la surveillance pour la détection de rançongiciels ; et
étape b) comprenant en outre le gestionnaire de surveillance de fichiers ignorant chaque événement de création, de suppression, de mise à jour et de renommage de fichier inclus dans la liste d'exclusion.

13. Module de détection et d'isolement de rançongiciels associé de manière fonctionnelle à une plateforme de RMM basée sur le cloud selon la revendication 8,
le planificateur générant des événements de minuterie selon la planification temporelle prédéfinie ; et
à chaque événement de minuterie, le fait de déterminer par le planificateur si la file d'attente d'événements de fichiers d'éléments surveillés de métadonnées comporte des données d'événements de fichiers d'éléments surveillés,
si la file d'attente d'événements de fichiers d'éléments surveillés de métadonnées ne comporte aucune donnée d'événement de fichier d'élément surveillé, le planificateur s'arrête jusqu'à la génération du prochain événement de minuterie, et
si la file d'attente d'événements de fichiers d'éléments surveillés de métadonnées comporte des données d'événements de fichiers d'éléments surveillés, le planificateur extrait les données d'événements de fichiers d'éléments surveillés, vide la file d'attente d'événements de fichiers d'éléments surveillés de métadonnées et traite les données d'événements de fichiers d'éléments surveillés extraites afin de déterminer un état du module de RD, l'état du module de RD comprenant l'un parmi : abandon, poursuite ou alerte RW, l'état abandon indiquant une détection négative de chiffrement par rançongiciel pour l'un ou plusieurs des éléments surveillés répertoriées dans la file d'attente d'événements de fichiers d'éléments surveillés, l'état poursuite indiquant une détermination non concluante de chiffrement par rançongiciel pour l'un ou plusieurs des éléments surveillés répertoriées dans la file d'attente d'événements de fichiers d'éléments surveillés, et l'état alerte RW indiquant une détection de chiffrement par rançongiciel pour l'un ou plusieurs des éléments surveillés répertoriées dans la file d'attente d'événements de fichiers d'éléments surveillés.

14. Système de RMM associé de manière fonctionnelle à la surveillance et à la gestion d'une pluralité de dispositifs selon la revendication 1, comprenant en outre :
e) si un état d'alerte RW est positif, le module de RD réalise un premier procédé de remédiation pour identifier et éliminer un processus de rançongiciels associé à l'alerte RW, le premier procédé de remédiation comportant :
e1) la détermination de tous les processus en cours d'exécution qui ont été lancés avant le moment de détection d'un premier fichier chiffré, et qui ont été lancés dans un délai prédéterminé avant le moment de détection ;
e2) parmi les processus en cours d'exécution déterminés à l'étape e1), la détermination du processus actuellement en cours d'exécution, non inclus dans une liste de processus à exclure, avec un temps CPU-noyau cumulé moyen le plus élevé et associé à un nombre de descripteurs de système d'exploitation supérieur à un seuil prédéterminé ; et
e3) si les étapes e2) et e3) aboutissent à l'identification d'un processus de rançongiciel, l'élimination du processus de rançongiciel.

15. Système de RMM associé de manière fonctionnelle à la surveillance et à la gestion d'une pluralité de dispositifs selon la revendication 14, dans lequel, si un état d'alerte RW est positif, le module agent de RMM réalise un second procédé de remédiation pour identifier et éliminer un processus de rançongiciel associé à l'alerte RW, le second procédé de remédiation comportant :
f1) la détermination de tous les processus en cours d'exécution sur le dispositif local qui ne sont pas inclus dans une liste de processus à exclure ;
f2) parmi les processus en cours d'exécution déterminés à l'étape f1), la création d'un compteur de performance de processus pour chaque processus en cours d'exécution déterminé, les compteurs de performance de processus suivant les octets d'écriture d'entrées/sorties, E/S, par seconde pour chaque processus ;
f3) l'identification d'un ou plusieurs processus de l'étape f2) présentant les valeurs de compteur relatives les plus élevées, indiquant que ces processus incluent les processus les plus intensifs en E/S et sont des potentiels processus de rançongiciels ; et
f4) l'élimination d'un ou plusieurs des processus identifiés à l'étape f3).
